# EUROPEAN PATENT SPECIFICATION

(11) **EP 0 944 967 B1**
(45) Date of publication and mention of the grant of the patent: **21.03.2007**
(21) Application number: 97949350.9
(22) Date of filing: 31.10.1997
(51) Int. Cl.: H04B 7/185

(54) **DIGITAL SATELLITE DIRECT BROADCAST SYSTEM**
DIGITALES DIREKTES RUNDFUNKSATELLITENSYSTEM
SYSTEME DE RADIODIFFUSION DIRECTE NUMERIQUE PAR SATELLITE

(30) Priority: 05.11.1996 US 746019; 05.11.1996 US 746020; 05.11.1996 US 746067; 05.11.1996 US 746069; 05.11.1996 US 746070; 05.11.1996 US 746071; 05.11.1996 US 746072
(43) Date of publication of application: 29.09.1999
(73) Proprietor: Worldspace, Inc., Silver Spring, MD 20910 (US)
(72) Inventor: CAMPANELLA, S., Joseph, Gaithersburg, MD 20879 (US); HARRIS, G., Christopher, Washington, DC 20005 (US)
(74) Representative: Quinterno, Giuseppe
(86) International application number: PCT/US1997/019631
(87) International publication number: WO 1998/020630

(56) References cited:
- US-A- 4 901 310
- US-A- 5 283 780
- US-A- 5 299 192
- US-A- 5 347 548
- US-A- 5 416 774
- US-A- 5 455 823
- FOURNIE et al., "Worldspace: The First DAB Satellite Service for the World", October 1995, pages 1-7.
- LOSQUADRO G., "Digital Audio Broadcasting: High-Grade Service Quality Through On-Board Processing Techniques", 1995, JOHN WILEY & SONS, LTD.

## Description

### Field of Invention

The invention relates to satellite broadcast systems a receiver unit for receiving a TDM data, the formatting of broadcast stream from a satellite and a method of recovering at least one prime rate channel in a TDM data stream from a satellite.

### Background of the Invention

There presently exists population of over 4 billion people that are generally dissatisfied and underserved by the poor sound quality of short-wave radio broadcasts, or the coverage limitations of amplitude modulation (AM) band and frequency modulation (FM) band terrestrial radio broadcast systems. This population is primarily located in Africa, Central and South America, and Asia. A need therefore exists for a satellite-based direct radio broadcast system to transmit signals such as audio, data and images to low-cost consumer receivers.

US-A-5 416 774 discloses a receiver unit for receiving a time division multiplexed (TDM) downlink data stream from a satellite, comprising a QPSK demodulator for demodulating the received downlink data stream into a stream of symbols. The downlink data stream comprises time slots having respective locations and is provided with a predetermined number of channels by the satellite. Said channels comprise each a plurality of symbols assigned, respectively, to said time slots. The QPSK demodulator has two outputs providing signals to a decoder. The decoder provides decoded digital signals to a digital output of the receiver unit to be coupled to another apparatus. Decoded digital signals are also passed through a digital filter to a D/A converter, to provide at an output terminal analogue sound signals to still another apparatus, such as a sound amplifier.

A number of satellite communications networks have been developed for commercial and military applications. These satellite communications systems, however, have not addressed the need to provide, multiple, independent broadcast service providers with flexible and economical access to a space segment, nor consumers' need to receive high quality radio signals using low-cost consumer radio receiver units. A need therefore exists for providing service providers with direct access to a satellite and choices as to the amount of space segment that's purchased and used. In addition, a need exists for a low-cost radio receiver unit capable of receiving time division multiplexed downlink bit stream.

It is an object of the invention to provide an improved unit and method of the initially defined kind.

### Summary of the Invention

The above-stated object is achieved by a receiver unit according to claim 1 and the method of claim 41.

In accordance with an aspect of the present invention, a receiver unit for receiving a time division multiplexed downlink data stream from a satellite comprises a phase shift keying demodulator for demodulating the downlink data stream, into a stream of symbols. The downlink data stream comprises slots and is provided with a predetermined number of prime rate channels in respective ones of the slots by the satellite. A correlator is connected to the demodulator for locating and synchronizing to a master frame preamble inserted in the stream of symbols by the satellite. A demultiplexer is connected to the correlator for locating a time slot control channel in the stream of symbols. The time slot control channel is inserted into the stream of symbols by the satellite to identify which of the slots comprises the prime rate channels corresponding to each of a plurality of broadcast service providers. An input device is provided to allow an operator to select one the broadcast service providers and to provide an output signal to the demultiplexer. The demultiplexer extracts selected ones of the prime rate channels from the stream of data using the time slot control channel and the output signal.

In accordance with another aspect of the invention, the correlator is operable in a search mode, a synchronized operation mode and a predictive mode.

In accordance with yet another aspect of the present invention, a method of receiving one of a plurality of prime rate channels transmitted via downlink signals from a satellite comprises the step of demodulating downlink signals into a baseband time division multiplex bit stream comprising frames generated by the satellite. Each of the frames comprises a plurality of time slots, each of the time slots having a set of symbols. Each symbol in the set of symbols corresponding to a respective one of the prime rate channels occupies a similar symbol position in each of the time slots. The method further comprises the steps of locating the frames in the bit stream using a master frame preamble inserted therein by the satellite, and retrieving from the set of symbols in each of the time slots of at least one of the frames the symbols that correspond to one of the prime rate channels.

In accordance with an aspect of the present invention, a method for formatting broadcast data for transmission on an uplink carrier to a satellite is provided which combines data streams from a number of service providers into parallel streams on uplink carriers to allow for efficient and economic use of the space segment. Bits in a program are assembled into a first number of prime rate increments having uniform and predetermined rates. A frame having a predetermined duration is generated which comprises each of the prime rate increments and a frame header. The frame is divided into symbols, each of the symbols comprising a predetermined and consecutive number of the program bits. The symbols are demultiplexed into a second number of parallel prime rate channels, with the symbols being provided to alternating ones of the prime rate channels so as to separate consecutive symbols. The prime rate channels each comprise a prime rate channel synchronization header for recovering the prime rate channels at said remote receiver units. The prime rate channels are then demultiplexed onto a corresponding number of uplink carrier frequencies for broadcast transmission.

In accordance with an aspect of the invention, prime rate increments can be divided into two segments to transmit two different types of data for a particular service.

In accordance with yet another aspect of the invention, the frames are encoded for forward error protection correction using two concatenated coding methods and interleaving.

In accordance with an aspect of the present invention, a system is provided for managing a satellite and a number of broadcast stations for generating programs for transmission to remote radio receivers on broadcast channels via the satellite. The system comprises a satellite control system configured to generate control signals for controlling the attitude and orbit of the satellite, and command signals for controlling on-board processing of the programs uplinked to the satellite. At least one telemetry, range and control system is connected to the satellite control center to communicate with the satellite to provide the control signals and the data processing signals thereto. The system also comprises a broadcast control system connected to the satellite control center and to the broadcast stations. The broadcast control system is operable to assign selected ones of the broadcast channels to service providers desiring to uplink at least one of the programs to the satellite, to store channel data relating to the assignments of the broadcast channels and provide the channel data to the satellite control system, and to bill the service providers according to the number of the broadcast channels assigned thereto. The broadcast control system provides the service providers with a plurality of options comprising the number of said broadcast channels to be reserved for uplink transmission, dates and times of day for using the reserved broadcast channels, and which of a number beams associated with the satellite are to be used for downlink transmission. The broadcast control system notifies the satellite control system as to which of the beams are to be used, and the satellite control system generates corresponding data processing signals for routing the program to selected ones of the beams, The broadcast control system is also operable to instruct the broadcast stations as to when to terminate use of the broadcast channels assigned thereto during the dates and times of day when the broadcast channels are not reserved therefor.

In accordance with another aspect of the invention, the broadcast control station is programmable to perform a defragmentation process on the broadcast channel assignments to make more efficient use of the space segment.

In accordance with another aspect of the invention, the transmitted signals are digital and are, therefore, more robust against transmission impairments. Digital signaling also provides flexibility for supplying a full scope of future services.

In accordance with an aspect of the present invention, an apparatus for switching symbols in parallel broadcast channels to time division multiplexed data streams comprises first and second ping-pong buffers. The first ping-pong buffer is configured to store a first plurality of the parallel broadcast channels therein The second ping-pong buffer is operable to store a second plurality of the broadcast channels therein. The second plurality of broadcast channels arrive at the second ping-pong buffer prior to the arrival of the first plurality of broadcast channels at the first ping-pong buffer. The apparatus also comprises a routing switch connected to the outputs of the first and second ping-pong buffers, and a first frame assembler connected to the routing switch. The routing switch controls the writing of the contents of the second ping-pong buffer to the first frame assembler.

In accordance with another aspect of the invention, the contents of ping-pong buffer can be switched to corresponding slots in two or more frame assemblers.

In accordance with an aspect of the present invention, a satellite payload processing system for processing a single-channel-per-carrier, frequency division multiple access uplink signal is provided which comprises a polyphase demultiplexer processor for separating the uplink signal into a time division multiplexed data stream of symbols. The polyphase demultiplexer processor presents the symbols corresponding to each of a plurality of carriers at respective ones of the frequencies in the uplink signal sequentially to an output of said polyphase demultiplexer processor. A phase shift keying demodulator is connected to the output of the polyphase demultiplexer processor for demodulating the stream of symbols into corresponding time division multiplexed stream of digital baseband bits.

In accordance with yet another aspect of the present invention, a rate alignment apparatus for a satellite comprises an on-board clock, an input switch, an output switch and a ping-pong buffer pair comprising first and second buffers and connected to the input switch and the output switch. The first and second buffers receive a stream of digital baseband symbols recovered from an uplink signal depending on the operation of the input switch and the output switch. The first buffer of the buffer pair receives the bits in accordance with an uplink clock rate obtained from said uplink signal. The second buffer of the buffer pair substantially simultaneously empties the stored contents thereof to a third buffer in accordance with the on-board clock, the operations of said first and second buffers being reversed upon actuation of the input switch and the output switch. First and second correlators are connected to said first and second buffers, respectively, to generate a spike when a header denoting when a frame in the stream of baseband symbols is detected. The buffer pair is operable to continue to write the stream of baseband symbols into one of the buffer pair until the spike occurs. The input switch and the output switch are switched to their reverse states, and the first and second buffers the uplink signal are read to the output thereof in accordance with the on-board clock rate. A synchronized pulse oscillator connected to the first and second correlators generates a smoothed pulse for each of the symbols read to the output. A counter connected to the oscillator counts the smoothed pulses. A number of bits is added to or removed from the headers of the streams in accordance with the value of said counter.

### Brief Description of the Drawings

These and other features and advantages of the present invention will be more readily comprehended from the following detailed description when read in connection with the appended drawings, which form a part of this original disclosure, and wherein:
Fig. 1 is a schematic diagram of a satellite direct broadcast system constructed in accordance with an embodiment of the present invention;
Fig. 2 is a flow chart depicting the sequence of operations for end-to-end signal processing in the system depicted in Fig. 1 in accordance with an embodiment of the present invention;
Fig. 3 is a schematic block diagram of a broadcast earth station constructed in accordance with an embodiment of the present invention;
Fig. 4 is a schematic diagram illustrating broadcast segment multiplexing in accordance with an embodiment of the present invention;
Fig. 5 is a schematic block diagram of an on-board processing payload for a satellite in accordance with an embodiment of the present invention;
Fig. 6 is a schematic diagram illustrating on-board satellite demultiplexing and demodulation processing in accordance with an embodiment of the present invention;
Fig. 7 is a schematic diagram illustrating on-board satellite rate alignment processing in accordance with an embodiment of the present invention;
Fig. 8 is a schematic diagram illustrating on-board satellite switching and time division multiplexing operations in accordance with an embodiment of the present invention;
Fig. 9 is a schematic block diagram of a radio receiver for use in the system depicted in Fig. 1 and constructed in accordance with an embodiment of the present invention; .
Fig. 10 is a schematic diagram illustrating receiver synchronization and demultiplexing operations in accordance with an embodiment of the present invention;
Fig. 11 is a schematic diagram illustrating synchronization and multiplexing operations for recovering coded broadcast channels at a receiver in accordance with an embodiment of the present invention; and
Fig. 12 is a schematic diagram of a system for managing satellite and broadcast stations in accordance with an embodiment of the present invention.

### Detailed Description of the Preferred Embodiments

### Overview

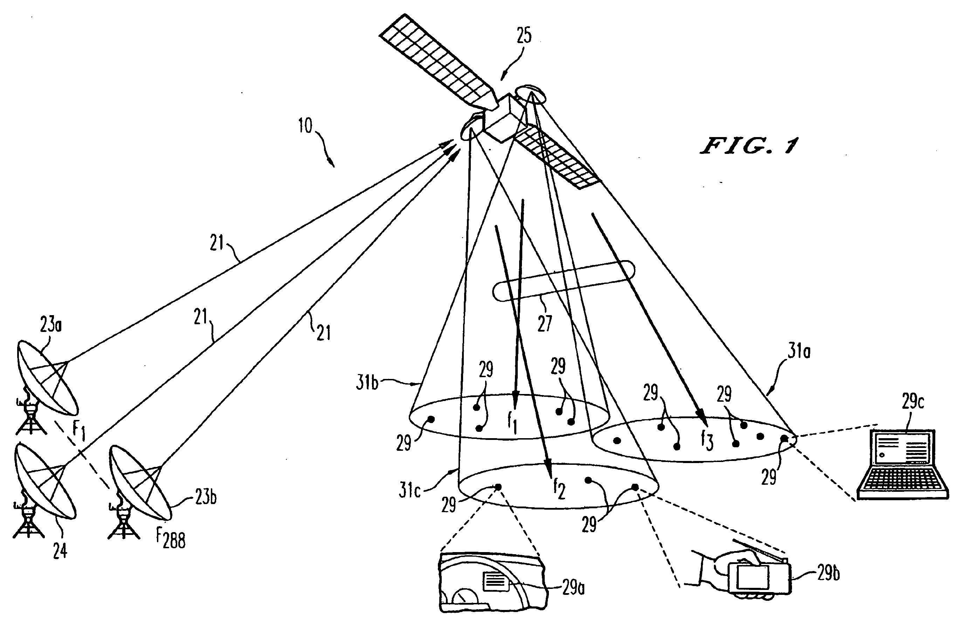

In accordance with the present invention, a satellite-based radio broadcast system 10 is provided to broadcast programs via a satellite 25 from a number of different broadcast stations 23a and 23b (hereinafter referred to generally as 23), as shown in Fig. 1. Users are provided with radio receivers, indicated generally at 29, which are designed to receive one or more time division multiplexed (TDM) L-band carriers 27 downlinked from the satellite 25 that are modulated at 1.86 Megasymbols per second (Msym/s). The user radios 29 are designed to demodulate and demultiplex the TDM carrier to recover bits that constitute the digital information content or program transmitted on broadcast channels from the broadcast stations 23. In accordance with an embodiment of the invention, the broadcast stations 23 and the satellite 25 are configured to format uplink and downlink signals to allow for improved reception of broadcast programs using relatively low cost radio receivers. A radio receiver can be a mobile unit 29a mounted in a transportation vehicle, for example, a hand-held unit 28b or a processing terminal 29c with a display.

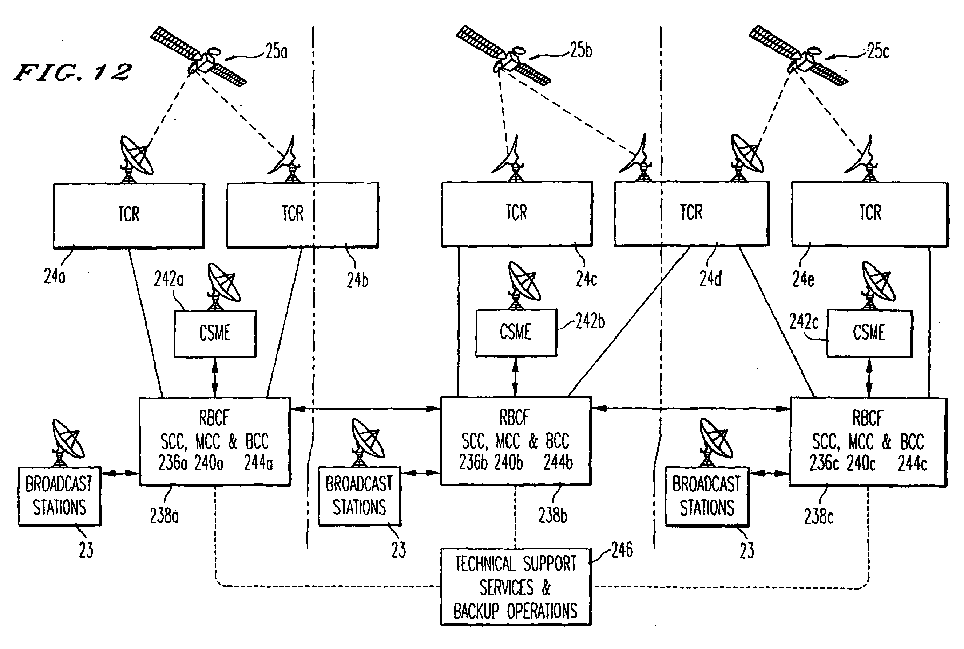

Although only one satellite 25 is shown in Fig. 1 for illustrative purposes, the system 10 preferably comprises three geostationary satellites 25a, 25b and 25c (Fig. 12) configured to use frequency bands of 1467 to 1492 Megahertz (MHz) which has been allocated for broadcasting satellite service (BSS) direct audio broadcast (DAB). The broadcast stations 23 preferably use feeder uplinks 21 in the X-band, that is from 7050 to 7075 MHz. Each satellite 25 is preferably configured to operate three downlink spot beams indicated at 31a, 31b and 31c. Each beam covers approximately 14 million square kilometers within power distribution contours that are four decibels (dB) down from beam center and 28 million square kilometers within contours that are eight dB down. The beam center margin can be 14 dB based on a receiver gain-to-temperature ratio of - 13 dB/K.

With continued reference to Fig. 1, the uplink signals 21 generated from the broadcast stations 23 are modulated in frequency division multiple access (FDMA) channels from the ground stations 23 which are preferably located within the terrestrial visibility of the satellite 25. Each broadcast station 23 preferably has the ability to uplink directly from its own facilities to one of the satellites and to place one or more 16 kilobit per second (kbps) prime rate increments on a single carrier. Use of FDMA channels for uplink allows for a significant amount of flexibility for sharing the space segment among multiple independent broadcast stations 23 and significantly reduces the power and hence the cost of the uplink earth stations 23. Prime rate increments (PRIs) of 16 kilobits per second (kbps) are preferably the most fundamental building block or rudimentary unit used in the system 10 for channel size and can be combined to achieve higher bit rates. For example, PRIs can be combined to create program channels with bit rates up to 128 kbps for near compact disc quality sound or multimedia broadcast programs comprising image data, for example.

Conversion between uplink FDMA channels and downlink multiple channel per carrier/time division multiplex (MCPC/TDM) channels is achieved on-board each satellite 25 at the baseband level. As will be described in further detail below, prime rate channels transmitted by a broadcast station 23 are demultiplexed at the satellite 25 into individual 16 kbps baseband signals. The individual channels are then routed to one or more of the downlink beams 31a, 31b and 31c, each of which is a single TDM stream per carrier signal. This baseband processing provides a high level of channel control in terms of uplink frequency allocation and channel routing between uplink FDMA and downlink TDM signals.

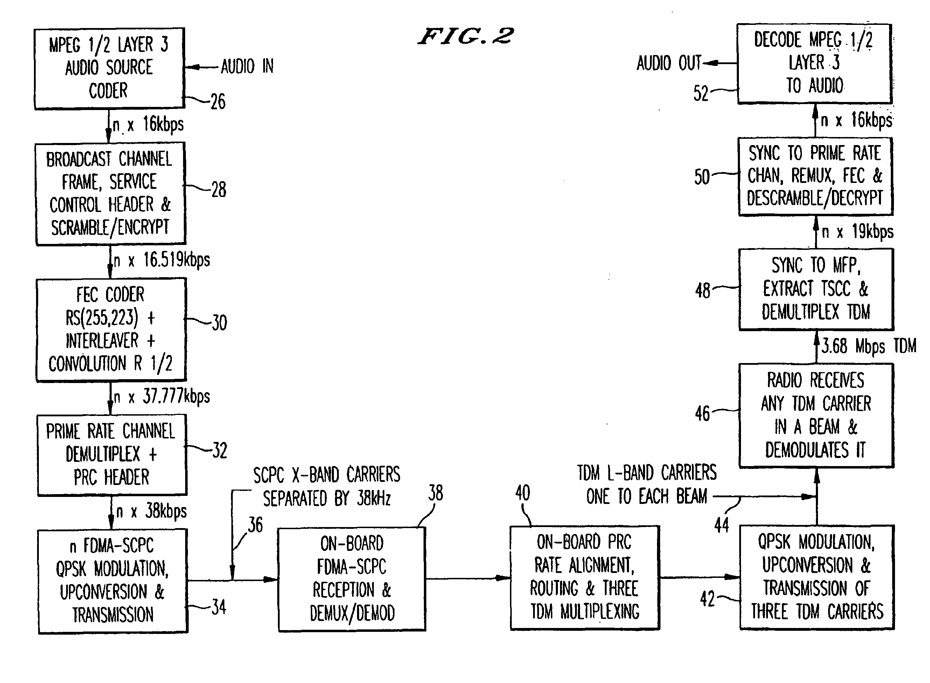

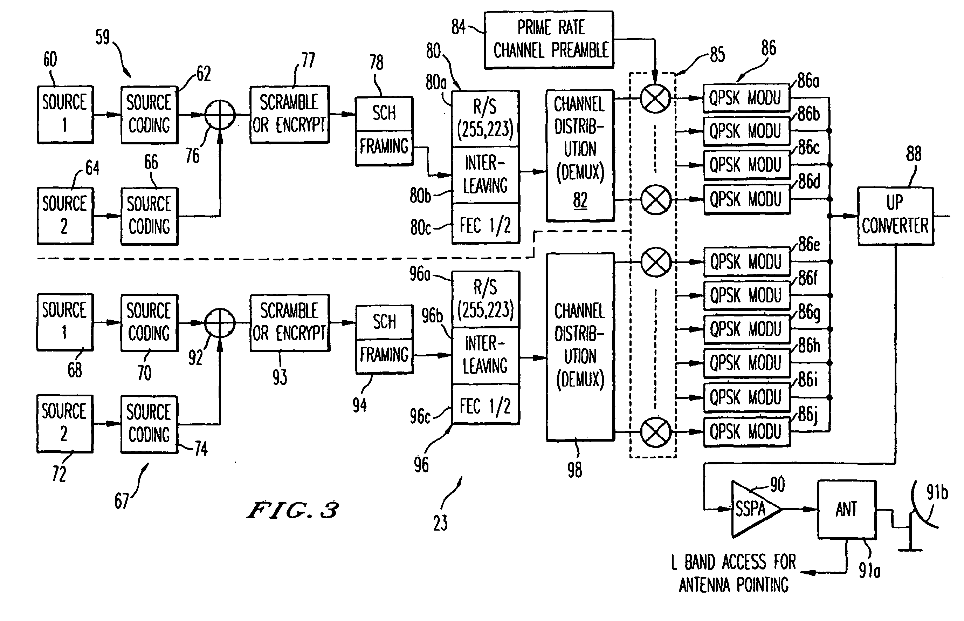

The end-to-end signal processing that occurs in the system 10 is described with reference to Fig. 2. The system components responsible for the end-to-end signal processing is described in further detail below with reference to Figs. 3-11. As shown in Fig. 2, audio signals from an audio source, for example, at a broadcast station 23, are preferably coded using MPEG 2.5 Layer 3 coding (block 26). The digital information assembled by a broadcast service provider at a broadcast station 23 is preferably formatted in 16 kbps increments or PRIs where n is the number of PRIs purchased by the service provider (i.e., n x 16 kbps). The digital information is then formatted into a broadcast channel frame having a service control header (SCH) (block 28), described in further detail below. A periodic frame in the system 10 preferably has a period duration of 432 milliseconds (ms). Each frame is preferably assigned n x 224 bits for the SCH such that the bit rate becomes approximately n x 16.519 kbps. Each frame is next scrambled by addition of a pseudo random bit stream to the SCH. Information control of the scrambling pattern by a key permits encryption. The bits in a frame are subsequently coded for forward error correction (FEC) protection using preferably two concatenated coding methods such as the Reed Solomon method, followed by interleaving, and then convolution coding (e.g., trellis convolution coding described by Viterbi) (block 30). The coded bits in each frame corresponding to each PRI are subsequently subdivided or demultiplexed into n parallel prime rate channels (PRCs) (block 32). To implement recovery of each PRC, a PRC synchronization header is provided. Each of the n PRCs is next differentially encoded and then modulated using, for example, quadrature phase shift keying modulation onto an intermediate frequency (IF) carrier frequency (block 34). The n PRC IF carrier frequencies constituting the broadcast channel of a broadcast station 23 is convened to the X-band for transmission to the satellite 25, as indicated by the arrow 36.

The carriers from the broadcast stations 23 are single channel per carrier/frequency division multiple access (SCPC/FDMA) carriers. On-board each satellite 25, the SCPC/FDMA carriers are received, demultiplexed and demodulated to recover the PRC carriers (block 38). The PRC digital baseband channels recovered by the satellite 25 are subjected to a rate alignment function to compensate for clock rate differences between the on-board satellite clock and that of the PRC carriers received at the satellite (block 40). The demultiplexed and demodulated digital streams obtained from the PRCs are provided to TDM frame assemblers using routing and switching components. The PRC digital streams are routed from demultiplexing and demodulating equipment on-board the satellite 25 to the TDMA frame assemblers in accordance with a switching sequence unit on-board the satellite that is controlled from an earth station via a command link (e.g., a satellite control center 236 in Fig. 12 for each operating region). Three TDM carriers are created which correspond to each of the three satellite beams 31a, 31b and 31c (block 42). The three TDM carriers are up converted to L-band frequencies following QPSK modulation, as indicated by arrow 44. Radio receivers 29 are configured to receive any of the three TDM carriers and to demodulate the received carrier (block 46). The radio receivers 29 are designed to synchronize a TDM bit stream using a master frame preamble provided during on-board satellite processing (block 48). PRCs are demultiplexed from the TDM frame using a Time Slot Control Channel (TSCC), as well. The digital streams are then remultiplexed into the FEC-coded PRC format described above with reference to block 30 (block 50). The FEC processing preferably includes decoding using a Viterbi trellis decoder, for example, deinterleaving, and then Reed Solomon decoding to recover the original broadcast channel comprising n x 16 kbps channel and the SCH. The n x 16 kbps segment of the broadcast channel is supplied to an MPEG 2.5 Layer 3 source decoder for conversion back to audio. In accordance with the present invention, the audio output is available via a very low cost broadcast radio receiver 27 due to the processing and TDM formatting described above in connection with the broadcast station(s) 23 and the satellite 25 (block 52).

### Uplink Multiplexing and Modulation

Signal processing to convert data streams from one or more broadcast stations 23 into parallel streams for transmission to a satellite 25 will now be described with reference to Fig. 3. For illustrative purposes, four sources 60, 64, 68, and 72 of program information are shown. Two sources 60 and 64, or 68 and 72, are coded and transmitted together as part of a single program or service. The coding of the program comprising combined audio sources 60 and 64 will be described. The signal processing of the program comprising digital information from sources 68 and 72 is identical.

As stated previously, broadcast stations 23 assemble information from one or more sources 60 and 64 for a particular program into broadcast channels characterized by increments of 16 kbps. These increments are referred to as prime rate increments or PRIs. Thus, the bit rate carried in a broadcast channel is n x 16 kbps were n is the number of PRIs used by that particular broadcast service provider. In addition, each 16 kbps PRI can be further divided into two 8 kbps segments which are routed or switched together through the system 10. The segments provide a mechanism for carrying two different service items in the same PRI such as a data stream with low bit rate speech signals, or two low bit rate speech channels for two respective languages, and so on. The number of PRIs are preferably predetermined, that is, set in accordance with program code. The number n, however, is not a physical limitation of the system 10. The value of n is generally set on the basis of business concerns such as the cost of a single broadcast channel and the willingness of the service providers to pay. In Fig. 3, n for the first broadcast channel 59 for sources 60 and 64 is equal to 4. The value of n for the broadcast channel 67 for sources 68 and 72 is set to 6 in the illustrated embodiment.

As shown in Fig. 3, more than one broadcast service provider can have access to a single broadcast station 23. For example, a first service provider generates broadcast channel 59, while a second service provider can generate broadcast channel 67. The signal processing described herein and in accordance with the present invention allows data streams from several broadcast service providers to be broadcast to a satellite in parallel streams which reduces the cost of broadcasting for the service providers and maximizes use of the space segment. By maximizing efficiency of space segment usage, the broadcast stations 23 can be implemented less expensively using less power-consuming components. For example, the antenna at the broadcast station 23 can be very small aperture terminal (VSAT) antenna. The payload on the satellite requires less memory, less processing capability and therefore fewer power sources which reduces payload weight.

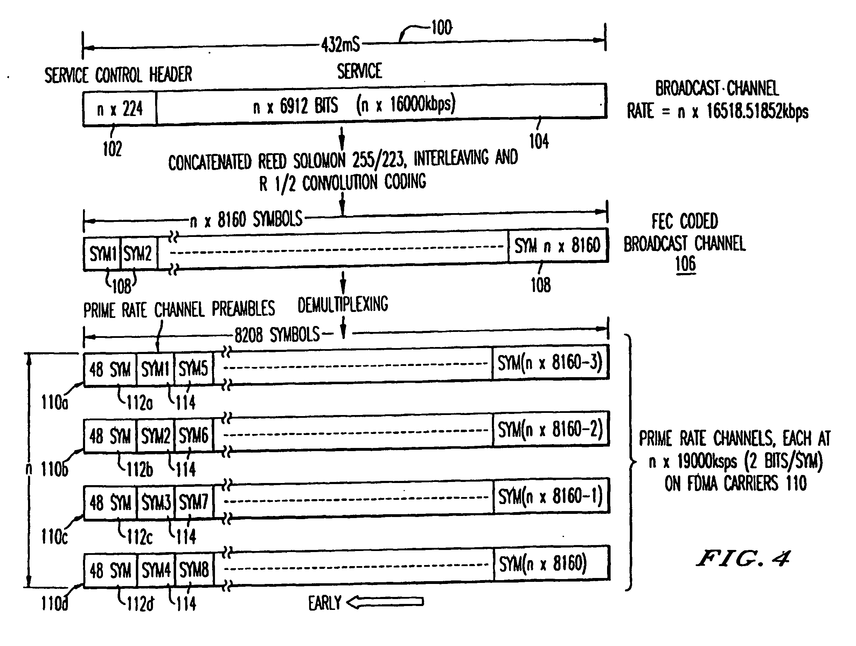

A broadcast channel 59 or 67 is characterized by a frame 100 having a period duration of 432 ms, as shown in Fig. 4. This period duration is selected to facilitate use of the MPEG source coder described below; however, the frame paired in the system 10 can be set to a different predetermined value. If the period duration is 432 ms, then each 16 kbps PRI requires 16,000 x 0.432 seconds - 6912 bits per frame. As shown in Fig. 4, a broadcast channel therefore consists of a value n of these 16 kbps PRIs which are carried as a group in the frame 100. As will be described below, these bits are scrambled to enhance demodulation at the radio receivers 29. The scrambling operation also provides a mechanism for encrypting the service at the option of the service provider. Each frame 100 is assigned n x 224 bits which correspond to a service control header (SCH), resulting in a total of n x 7136 bits per frame and a bit rate of n x (16;518 + 14\27) bits per second. The purpose of the SCH is to send data to each of the radio receivers 29 tuned to receive the broadcast channel 59 or 67 in order to control reception modes for various multimedia services, to display data and images, to send key information for decryption, to address a specific receiver, among other features.

With continued reference to Fig. 3, the sources 60 and 64 are coded using, for example, MPEG 2.5 Layer 3 coders 62 and 66, respectively. The two sources are subsequently added via a combiner 76 and then processed using a processor at the broadcast station 23 to provide the coded signals in periodic frames of 432 ms, that is, n x 7136 bits per frame including the SCH, as indicated by processing module 78 in Fig. 3. The blocks indicated at the broadcast station in Fig. 3 correspond to programmed modules performed by a processor and associated hardware such as digital memory and coder circuits. The bits in the frame 100 are subsequently coded for FEC protection using digital signal processing (DSP) software, application specific integrated circuits (ASICs) and custom large-scale integration (LSI) chips for the two concatenated coding methods. First, a Reed Solomon coder 80a is provided to produce 255 bits for every 223 bits entering the coder. The bits in the frame 100 are then reordered according to a known interleaving scheme, as indicated by reference number 80b. The interleaving coding provides further protection against bursts of error encountered in a transmission since this method spreads damaged bits over several channels. With continued reference to processing module 80, a known convolution coding scheme of constraint length 7 is applied using a Viterbi coder 80c. The Viterbi coder 83c produces two output bits for every input bit, producing as a net result 16320 FEC-coded bits per frame for each increment of 6912 bits per frame applied in the broadcast channel 59. Thus, each FEC-coded broadcast channel (e.g., channel 59 or 67) comprises n x 16320 bits of information which have been coded, reordered and coded again such that the original broadcast 16 kbps PRIs are no longer identifiable. The FEC-coded bits, however, are organized in terms of the original 432 ms frame structure. The overall coding rate for error protection is (255/223) x 2 = 2+64/223.

With continued reference to Fig. 3, the n x 16320 bits of the FEC-coded broadcast channel frame is subsequently subdivided or demultiplexed using a channel distributor 82 into n parallel prime rate channels (PRCs), each carrying 16320 bits in terms of sets of 8160 two-bit symbols. This process is further illustrated in Fig. 4. The broadcast channel 59 is shown which is characterized by a 432 ms frame 100 having an SCH 102. The remaining portion 104 of the frame consists of n 16 kbps PRIs which corresponds to 6912 bits per frame for each of the n PRIs. The FEC-coded broadcast channel 106 is attained following concatenated Reed Solomon 255/223, interleaving and FEC 1/2 convolution coding described above in connection with module 80. As stated previously, the FEC-coded broadcast channel frame 106 comprises n x 16320 bits which correspond to 8160 sets of two-bit symbols, with each symbol being designated by a reference numeral 108 for illustrated purposes. In accordance with the present invention, the symbols are assigned across the PRCs 110 in the manner shown in Fig. 4. Thus, the symbols will be spread on the basis of time and frequency which further reduces errors at the radio receiver caused by interference in transmission. The service provider for broadcast channel 59 has purchased four PRCs for illustrative purposes, whereas the service provider for broadcast channel 67 has purchased six PRCs for illustrative purposes. Fig. 4 illustrates the first broadcast channel 59 and the assignment of symbols 114 across the n = 4 PRCs 110a, 110b, 110c and 110d, respectively. To implement recovery of each two-bit symbol 114 set at the receiver, a PRC synchronization header or preamble 112a, 112b, 112c and 112d, respectively, is placed in front of each PRC. The PRC synchronization header (hereinafter generally referred to using reference numeral 112) contains 48 symbols. The PRC synchronization header 112 is placed in front of each group of 8160 symbols, thereby increasing the number of symbols per 432 ms frame to 8208 symbols. Accordingly, the symbol rate becomes 8208/0.432 which equals 19,000 kilosymbols per second (ksym/s) for each PRC 110. The 48 symbol PRC preamble 112 is used essentially for synchronization of the radio receiver PRC clock to recover the symbols from the downlink satellite transmission 27. At the on-board processor 116, the PRC preamble is used to absorb timing differences between the symbol rates of arriving uplink signals and that used on-board to switch the signals and assemble the downlink TDM streams. This is done by adding, subtracting a "0" or neither to each 48 symbol PRC in the rate alignment process used on-board the satellite. Thus, the PRC preambles carried on the TDM downlink has 47, 48 or 49 symbols as determined by the rate alignment process. As shown in Fig. 4, symbols 114 are assigned to consecutive PRCs in a round-robin fashion such that symbol 1 is assigned to PRC 110a, symbol 2 is assigned to PRC 110b, symbol 3 is assigned to PRC 110c, symbol 4 is assigned to PRC 110d, symbol 5 is assigned to PRC 110e, and so on. This PRC demultiplexing process is performed by a processor at the broadcast station 23 and is represented in Fig. 3 as the channel distribution (DEMUX) module 82.

The PRC channel preambles are assigned to mark the beginning of the PRC frames 110a, 110b, 110c and 110d for broadcast channel 59 using the preamble module 84 and adder module 85. The n PRCs are subsequently differentially encoded and then QPSK modulated onto an IF carrier frequency using a bank of QPSK modulators 86 as shown in Fig. 3. Four of the QPSK modulators 86a, 86b, 86c and 86d are used for respective PRCs 110a, 110b, 110c and 110d for broadcast channel 59. Accordingly, there are four PRC IF carrier frequencies constituting the broadcast channel 59. Each of the four carrier frequencies is up-converted to its assigned frequency location in the X-band using an up-converter 88 for transmission to the satellite 25. The up-converted PRCs are subsequently transmitted through an amplifier 90 to the antenna (e:g., a VSA 1') 91a and 91b.

In accordance with the present invention, the transmission method employed at a broadcast station 23 incorporates a multiplicity of n Single Channel Per Carrier, Frequency Division Multiple Access (SCPC/FDMA) carriers into the uplink signal 21. These SCPC/FDMA carriers are spaced on a grid of center frequencies which are preferably separated by 38,000 Hertz (Hz) from one another and are organized in groups of 48 contiguous center frequencies or carrier channels. Organization of these groups of 48 carrier channels is useful to prepare for demultiplexing and demodulation processing conducted on-board the satellite 25. The various groups of 48 carrier channels are not necessarily contiguous to one another. The carriers associated with a particular broadcast channel (i.e., channel 59 or 67) are not necessarily contiguous within a group of 48 carrier channels and need not be assigned in the same group of 48 carrier channels. The transmission method described in connection with Figs. 3 and 4 therefore allows for flexibility in choosing frequency locations and optimizes the ability to fill the available frequency spectrum and to avoid interference with other users sharing the same radio frequency spectrum.

The system 10 is advantageous because it provides a common base of capacity incrementation for a multiplicity of broadcast companies or service providers whereby broadcast channels of various bit rates can be constructed with relative ease and transmitted to a receiver 29. Typical broadcast channel increments or PRIs are preferably 16, 32, 48, 64, 80, 96, 112 and 128 kbps. The broadcast channels of various bit rates are interpreted with relative ease by the radio's receiver due to the processing described in connection with Fig. 4. The size and cost of a broadcast station can therefore be designed to fit the capacity requirements and financial resource limitations of a broadcast company. A broadcast company of meager financial means can install a small VSAT terminal requiring a relatively small amount of power to broadcast a 16 kbps service to its country that is sufficient to carry voice and music having quality far better than that of short-wave radio. On the other hand, a sophisticated broadcast company of substantial financial means can broadcast FM stereo quality with a slightly larger antenna and more power at 64 kbps and, with further increases in capacity, broadcast near compact disc (CD) stereo quality at 96 kbps and full CD stereo quality at 128 kbps.

The frame size, SCH size, preamble size and PRC length described in connection with Fig. 4 are used to realize a number of advantages; however, the broadcast station processing described in connection with Figs. 3 and 4 is not limited to these values. The frame period of 432 ms is convenient when using an MPEG source coder (e.g., coder 62 or 66). The 224 bits for each SCH 102 is selected to facilitate FEC coding. The 48 symbol PRC preamble 112 is selected to achieve 8208 symbols per PRC 110 to achieve 19,000 ksym/s for each PRC for a simplified implementation of multiplexing and demultiplexing on-board the satellite 25, as described in future detail below. Defining symbols to comprise two-bits is convenient for QPSK modulation (i.e., 2²= 4). To illustrate further, if phase shift key modulation at the broadcast station 23 uses eight phases as opposed to four phases, then a symbol defined as having three bits would be more convenient since each combination of three bits (i.e., 2³) can correspond to one of the eight phases.

Software can be provided at a broadcast station 23 or, if more than one broadcast station exists in the system 10, a regional broadcast control facility (RBCF) 238 (Fig. 12) to assign space segment channel routing via a mission control center (MCC) 240, a satellite control center (SCC) 236 and a broadcast control center (BCC) 244. The software optimizes use of the uplink spectrum by assigning PRC carrier channels 110 wherever space is available in the 48 channel groups. For example, a broadcast station may wish to broadcast a 64 kbps service on four PRC carriers. Due to current spectrum use, the four carriers may not be available in contiguous locations, but rather only in non-contiguous locations within a group of 48 carriers. Further, the RBCF 238 using its MCC and SCC may assign the PRCs to noncontiguous locations among different 48 channel groups. The MCC and SCC software at the RBCF 238 or a single broadcast station 23 can relocate PRC carriers of a particular broadcast service to other frequencies to avoid deliberate (i.e., jamming) or accidental interference on specific carrier locations. A current embodiment of the system has three RBCFs, one for each of the three regional satellites. Additional satellites can be controlled by one of these three facilities.

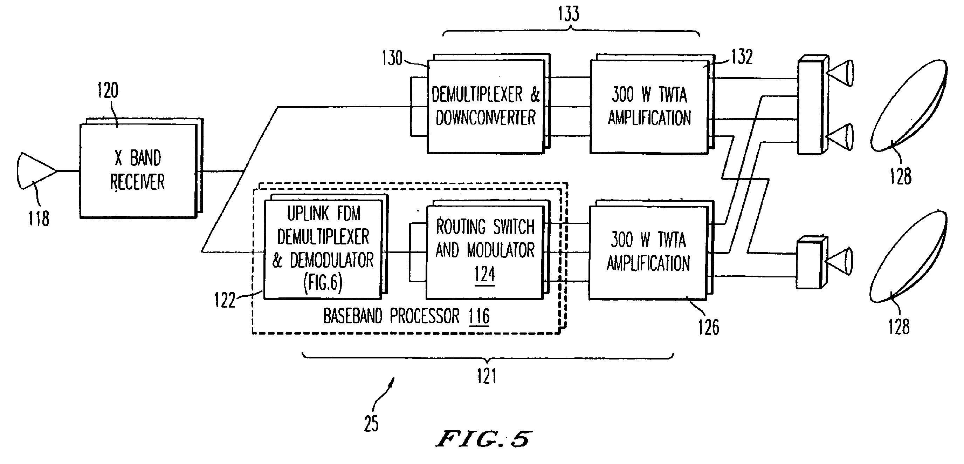

As will be described in further detail below in connection with on-board satellite processing in Fig. 6, an on-board digitally implemented polyphase processor is used for on-board signal regeneration and digital baseband recovery of the symbols 114 transmitted in the PRCs. The use of groups of 48 carriers spaced on center frequencies separated by 38,000 Hz facilitates processing by the polyphase processor. The software available at the broadcast station 23 or RBCF 238 can perform defragging, that is, defragmentation processing to optimize PRC 110 assignments to uplink carrier channels, that is, groups of 48 carrier channels. The principal behind defragmentation of uplink carrier frequency assignments is not unlike known software for reorganizing files on a computer hard drive which, over time, have been saved in such a piece-meal manner as to be inefficient for data storage. The BCC functions at the RBCF allows the RBCF to remotely monitor and control broadcast stations to assure their operation within assigned tolerances.

### Satellite Payload Processing

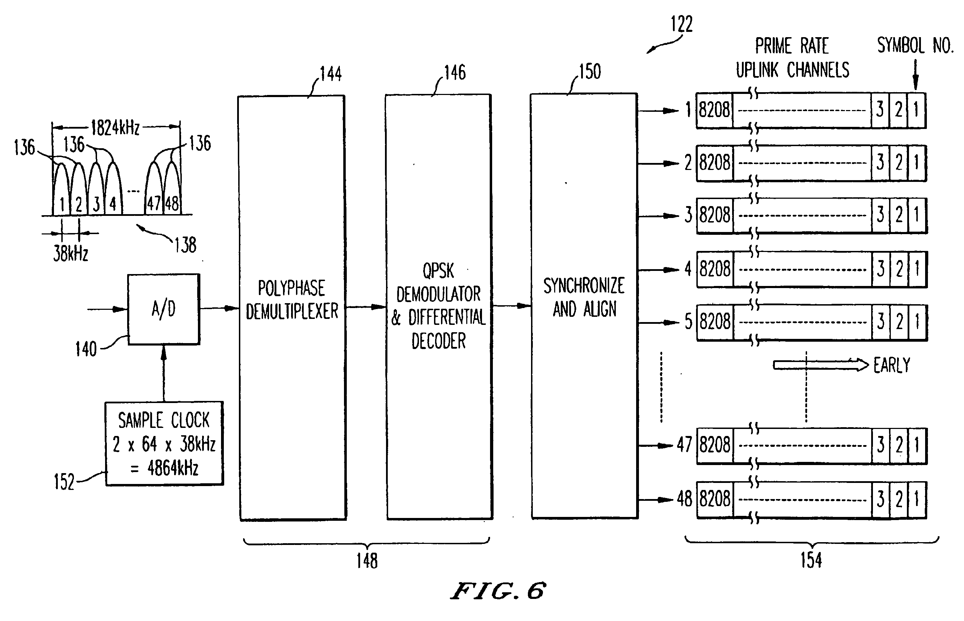

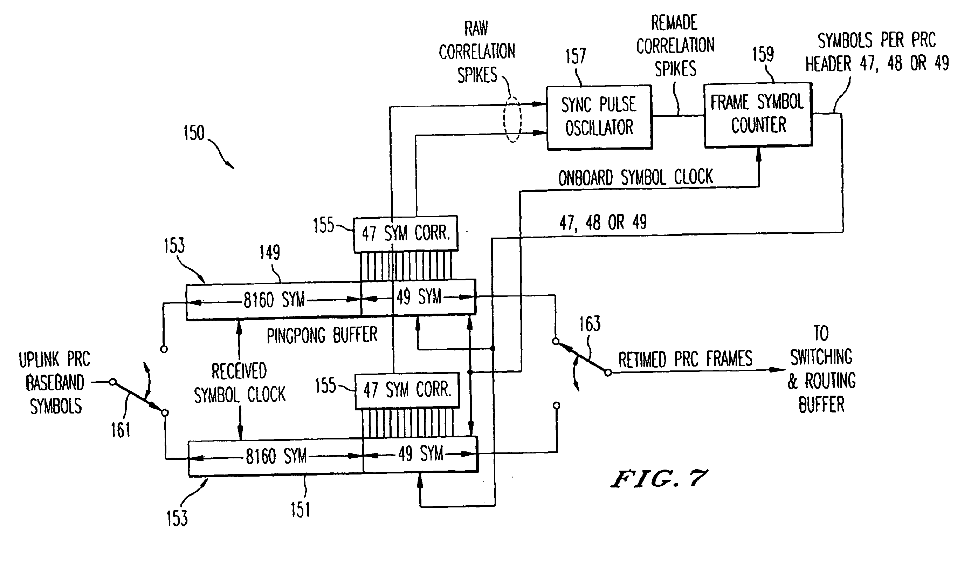

The baseband recovery on the satellite is important for accomplishing on-board switching and routing and assembly of TDM downlink carriers, each having 96 PRCs. The TDM carriers are amplified on-board the satellite 25 using single-carrier-per-traveling-wave-tube operation. The satellite 25 preferably comprises eight on-board baseband processors; however, only one processor 116 is shown. Preferably only six of the eight processors are used at a time, the remainder providing redundancy in event of failures and to command them to cease transmission if circumstances require such. A single processor 116 is described in connection with Figs. 6 and 7. It is to be understood that identical components are preferably provided for each of the other seven processors 116. With reference to Fig. 5, the coded PRC uplink carriers 21 are received at the satellite 25 by an X-band receiver 120. The overall uplink capacity is preferably between 288 and 384 PRC uplink channels of 16 kbps each (i.e., 6 x 48 carriers if six processors 116 are used, of 8 x 48 carriers if all eight processors 116 are used). As will be described in further detail below, 96 PRCs are selected and multiplexed for transmission in each downlink beam 27 onto a carrier of approximately 2.5 MHz bandwidth.

Each uplink PRC channel can be routed to all, some or none of the downlink beams 27. The order and placement of PRCs in a downlink beam is programmable and selectable from a telemetry, range and control (TRC) facility 24 (Fig. 1). Each polyphase demultiplexer and demodulator 122 receives the individual FDMA uplink signals in groups of 48 contiguous channels and generates a single analog signal on which the data of the 48 FDMA signals is time multiplexed, and performs a high speed demodulation of the serial data as described in further detail below in connection with Fig. 6. Six of these polyphase demultiplexer and demodulators 122 operate in parallel to process 288 FDMA signals. A routing switch and modulator 124 selectively directs individual channels of the six serial data streams into all, some or none of the downlink signals 27 and further modulates and up-converts the three downlink TDM signals 27. Three traveling wave tube amplifiers (TWTA) 126 individually amplify the three downlink signals, which are radiated to the earth by L-band transmit antennas 128.

The satellite 25 also contains three transparent payloads, each comprising a demultiplexer and down-converter 130 and an amplifier group 132 configured in a conventional "bent pipe" signal path which converts the frequency of input signals for retransmission. Thus, each satellite 25 in the system 10 is preferably equipped with two types of communication payloads. The first type of on-board processing payload is described with reference to Figs. 5, 6 and 7. The second type of communication payload is the transparent payload which converts uplink TDM carriers from frequency locations in the uplink X-band spectrum to frequency locations in the L-band downlink spectrum. The transmitted TDM stream for the transparent payload is assembled at a broadcast station 23, sent to the satellite 25, received and frequency converted to a downlink frequency location using module 130, amplified by a TWTA in module 132 and transmitted to one of the beams. To a radio receiver 29, the TDM signals appear identical whether they are from the on-board processing payload indicated at 121 or the transparent payload indicated at 133. The carrier frequency locations of each type of payload 121 and 133 are spaced on separate grids of 920 kHz spacing which are interlaced between one another in a bisected manner so that the carrier locations of a mix of signals from both types of payloads 121 and 133 are on 460 kHz spacings.

The on-board demultiplexer and demodulator 122 will now be described in further detail with reference to Fig. 6. As shown in Fig. 6, SCPC/FDMA carriers, each of which is designated with reference numeral 136, are assigned to groups of 48 channels. One group 138 is shown in Fig. 6 for illustrative purposes. The carriers 136 are spaced on a grid of center frequencies separated by 38 kHz. This spacing determines design parameters of the polyphase demultiplexers. For each satellite 25, preferably 288 uplink PRC SCPC/FDMA carriers can be received from a number of broadcast stations 23. Six polyphase demultiplexers and demodulators 122 are therefore preferably used. An on-board processor 116 accepts these PRC SCPC/FDMA uplink carriers 136 and converts them into three downlink TDM carriers, each carrying 96 of the PRCs in 96 time slots.

The 288 carriers are received by an uplink global beam antenna 118 and each group of 48 channels is frequency converted to an intermediate frequency (IF) which is then filtered to select a frequency band occupied by that particular group 138. This processing takes places in the receiver 120. The filtered signal is then supplied to an analog-to-digital (A/D) converter 140 before being supplied as an input to a polyphase demultiplexer 144. The demultiplexer 144 separates the 48 SCPC/FDMA channels 138 into a time division multiplexed analog signal stream comprising QPSK modulated symbols that sequentially present the content of each of 48 SCPC/FDMA channels at the output of the demultiplexer 144. This TDM analog signal stream is routed to a digitally implemented QPSK demodulator and differential decoder 146. The QPSK demodulator and differential decoder 146 sequentially demodulates the QPSK modulated symbols into digital baseband bits. Demodulation processing requires symbol timing and carrier recovery. Since the modulation is QPSK, baseband symbols containing two-bits each are recovered for each carrier symbol. The demultiplexer 144 and demodulator and decoder 146 will hereinafter be referred to as a demultiplexer/demodulator (D/D) 148. The D/D is preferably accomplished using high speed digital technology using the known Polyphase technique to demultiplex the uplink carriers 21. The QPSK demodulator is preferably a serially-shared, digitally-implemented demodulator for recovering the baseband two-bit symbols. The recovered symbols 114 from each PRC carrier 110 are subsequently differentially decoded to recover the original PRC symbols 108 applied at the input encoders, that is, the channel distributors 82 and 98 in Fig. 3, at the broadcast station 23. The satellite 25 payload preferably comprises six digitally implemented, 48 carrier D/Ds 148. In addition, two spare D/Ds 148 are provided in the satellite payload to replace any failed processing units.

With continued reference to Fig. 6, the processor 116 is programmed in accordance with a software module indicated at 150 to perform a synchronization and rate alignment function on the time division multiplexed symbol stream generated at the output of the QPSK demodulator and differential decoder 146. The software and hardware components (e.g., digital memory buffers and oscillators) of the rate alignment module 150 in Fig. 6 are described in more detail with reference to Fig. 7. The rate alignment module 150 compensates for clock rate differences between the on-board clock 152 and that of the symbols carried on the individual uplink PRC carriers 138 received at the satellite 25. The clock rates differ because of different clock rates at different broadcast stations 23, and different Doppler rates from different locations caused by motion of the satellite 25. Clock rate differences attributed to the broadcast stations 23 can originate in clocks at a broadcast station itself or in remote clocks, the rates of which are transferred over terrestrial links between a broadcast studio and a broadcast station 23.

The rate alignment module 150 adds or removes a "0" value symbol, or does neither operation in the PRC header portion 112 of each 432 ms recovered frame 100. A "0" value symbol is a symbol that consists of a bit value 0 on both the I and Q channels of the QPSK-modulated symbol. The PRC header 112 comprises 48 symbols under normal operating conditions and consists of an initial symbol of "0" value, followed by 47 other symbols. When the symbol times of the uplink clock, which is recovered by the QPSK demodulator 146 along with the uplink carrier frequency, and those of the on-board clock 152 are synchronized, no change is made to the PRC preamble 112 for that particular PRC 110. When the arriving uplink symbols have a timing that lags behind the on-board clock 152 by one symbol, a "0" symbol is added to the start of the PRC preamble 112 for the PRC currently being processed, yielding a length of 49 symbols. When the arriving uplink symbols have a timing that leads the on-board clock 152 by one symbol, a "0" symbol is deleted at the start of the PRC preamble 112 of the current PRC being processed, yielding a length of 47 symbols.

As stated previously, the input signal to the rate alignment module 150 comprises the stream of the recovered baseband two-bit symbols for each received uplink PRC at their individual original symbol rates. There are 288 such streams issued from the D/D 148 corresponding to each of the six active processors 116. The action involving only one D/D 148 and one rate alignment module 150 is described, although it is to be understood that the other five active processors 116 on the satellite perform similar functions.

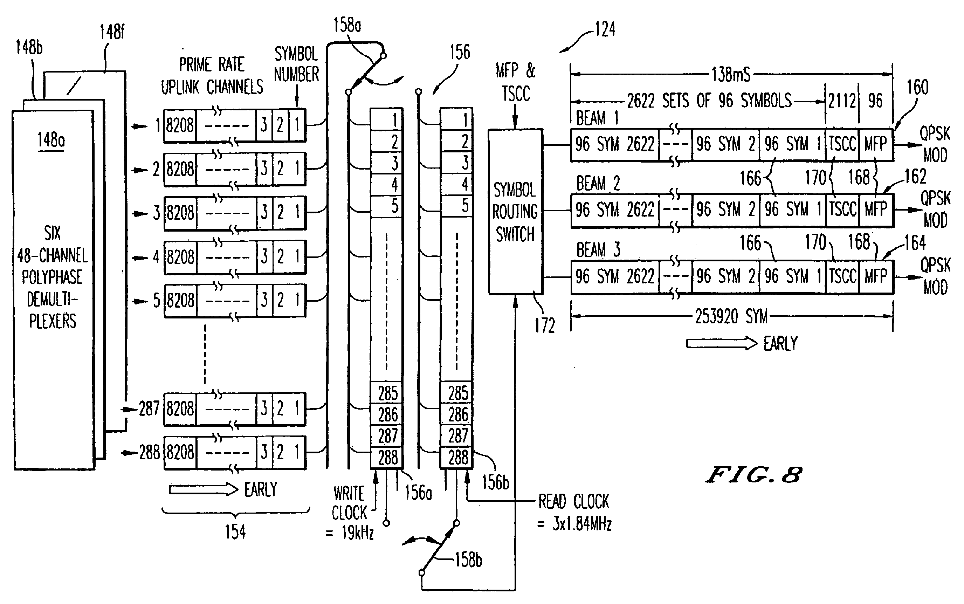

To rate align uplink PRC symbols to the on-board clock 152, three steps are performed. First, the symbols are grouped in terms of their original 8208 two-bit symbol PRC frames 110 in each buffer 149 and 151 of a ping-pong buffer 153. This requires correlation of the PRC header 112 (which contains a 47 symbol unique word) with a local stored copy of the unique word in correlators indicated at 155 to locate the symbols in a buffer. Second, the number of on-board clock 152 ticks between correlation spikes is determined and used to adjust the length of the PRC header 112 to compensate for the rate difference. Third, the PRC frame, with its modified header, is clocked at the on-board rate into its appropriate location in a switching and routing memory device 156 (Fig. 8).

PRC symbols enter the ping-pong buffer pair 153 at the left. The ping-pong action causes one buffer 149 or 151 to fill at the uplink clock rate, and the other buffer to simultaneously empty at the on-board clock rate. The roles reverse from one frame to the next and cause continuous flow between input and output of the buffer 149 and 151. Newly arriving symbols are written to the buffer 149 or 151 to which they happen to be connected. Writing continues to fill the buffer 149 or 151 until the correlation spike occurs. Writing then stops, and the input and output switches 161 and 163 switch to the reverse state. This captures an uplink PRC frame so that its 48 header symbols reside in the 48 symbol slots with one slot left unfilled at the output end of the buffer and the 8160 data symbols fill the first 8160 slots. The contents of the subject buffer are immediately read to the output thereof at the on-board clock rate. The number of symbols read out are such that the PRC header contains 47, 48 or 49 symbols. A "0" value symbol is removed or added at the start of the PRC header to make this adjustment. The header length 112 is controlled by a signal coming from a frame symbol counter 159 which counts the number of on-board clock rate symbols that will fall in a PRC frame period to determine the header length. The ping-pong action alternates the roles of the buffers.

To perform the count, the frame correlation spikes coming from the buffer correlators 155, as PRC frames fill the buffers 149 and 151, are smoothed by a synch pulse oscillator (SPC) 157. The smoothed sync pulses are used to count the number of symbol epochs per frame. The number will be 8207, 8208 or 8209 indicating whether the PRC header should be 47, 48 or 49 symbols long, respectively. This information causes the proper number of symbols to come from the frame buffers to maintain symbol flow synchronously with the on-board clock and independently of earth terminal origin.

For the rate differences anticipated over the system 10, the run times between preamble 112 modifications are relatively long. For instance, clock rate differences of 10⁻⁶ will elicit PRC preamble corrections on the average of one every 123 PRC frames. The resulting rate adjustments cause the symbol rates of the PRCs 110 to be precisely synchronized to the on-board clock 152. This allows routing of the baseband bit symbols to the proper locations in a TDM frame. The synchronized PRCs are indicated generally at 154 in Fig. 6. The on-board routing and switching of these PRCs 154 into TDM frames will now be described with reference to Fig. 8.

Fig. 6 illustrates PRC processing by a single D/D 148. Similar processing is performed by the other five active D/Ds on-board the satellite. The PRCs emanating from each of the six D/Ds 148, having been synchronized and aligned, occur in a serial stream having a symbol rate of 48 x 19,000 which equals 912,000 symbols per second for each D/D 148. The serial stream from each D/D 148 can be demultiplexed into 48 parallel PRC streams having rates of 19,000 symbols per second, as shown in Fig. 7. The aggregate of the PRC streams coming from all six D/Ds 148 on-board the satellite 25 is 288, with each D/D 148 carrying 19,000 sym/s streams. The symbols therefore have epochs or periods of 1/19,000 seconds which equals approximately 52.63 microseconds duration.

As shown in Fig. 8, 288 symbols are present at the outputs of the six D/Ds 148a, 148b, 148c, 148d, 148e and 148f for every uplink PRC symbol epoch. Once each PRC symbol epoch, 288 symbol values are written into a switching and routing memory 156. The contents of the buffer 156 are read into three downlink TDM frame assemblers 160, 162 and 164. Using a routing and switching component designated as 172, the contents of each of the 288 memory locations are read in terms of 2622 sets of 96 symbols to each of the three TDM frames in assemblers 160, 162 and 164 in an epoch of 136.8 ms which occurs once every TDM frame period or 138 ms. The scan rate or 136.8/2622 is therefore faster than the duration of a symbol. The routing switch and modulator 124 comprises a ping-pong memory configuration indicated generally at 156 and comprising buffers 156a and 156b, respectively. The 288 uplink PRCs indicated at 154 are supplied as input to the routing switch and modulator 124. The symbols of each PRC occur at a rate of 19,000 symbols per second corrected to the on-board clock 152 timing. The PRC symbols are written in parallel at the 19,000 Hz clock rate into 288 positions in the ping-pong memory 156a or 156b serving as the input. At the same time, the memory serving as the output 156b or 156a, respectively, is reading the symbols stored in the previous frame into the three TDM frames at a read rate of 3 x 1.84 MHz. This latter rate is sufficient to allow the simultaneous generation of the three TDM parallel streams, one directed to each of three beams. Routing of the symbols to their assigned beam is controlled by a symbol routing switch 172. This switch can route a symbol to any one, two or three of the TDM streams. Each TDM stream occurs at a rate of 1.84 Msym/s. The output memory is clocked for an interval of 136.8 ms and pauses for 1.2 ms to allow insertion of the 96 symbol MFP and 2112 symbol TSCC. Note that for every symbol that is read into more than one TDM stream, there is an off-setting uplink FDM PRC channel that is not used and is skipped. The ping-pong memory buffers 156a and 156b exchange roles from frame to frame via the switch components 158a and 158b.

With continued reference to Fig. 8, sets of 96 symbols are transferred to 2622 corresponding slots in each TDM frame. The corresponding symbols (i.e., the ith symbols) for all 96 uplink PRCs are grouped together in the same TDM frame slot as illustrated by the slot 166 for symbol 1. The contents of the 2622 slots of each TDM frame are scrambled by adding a pseudorandom bit pattern to the entire 136.8 ms epoch. In addition, a 1.2 ms epoch is appended at the start of each TDM frame to insert a master frame preamble (MFP) of 96 symbols and a TSCC of 2112 symbols, as indicated at 168 and 170, respectively. The sum of the 2622 time slots, each carrying 96 symbols, and the symbols for the MFP and TSCC is 253,920 symbols per TDM frame, resulting in a downlink symbol rate of 1.84 Msym/s.

The routing of the PRC symbols between the outputs of the six D/Ds 148A, 148B, 148C, 148D, 148E and 148F and the inputs to the TDM frame assemblers 160, 162 and 164 is controlled by an on-board switching sequence unit 172 which stores instructions sent to it over a command link from the SCC 238 (Fig. 12) from the ground. Each symbol originating from a selected uplink PRC symbol stream can be routed to a time slot in a TDM frame to be transmitted to a desired destination beam 27. The method of routing is independent of the relationships between the time of occurrence of symbols in various uplink PRCs and the occurrence of symbols in the downlink TDM streams. This reduces the complexity of the satellite 25 payload. Further, a symbol originating from a selected uplink PRC can be routed to two or three destination beams via the switch 158.

### Radio Receiver Operation

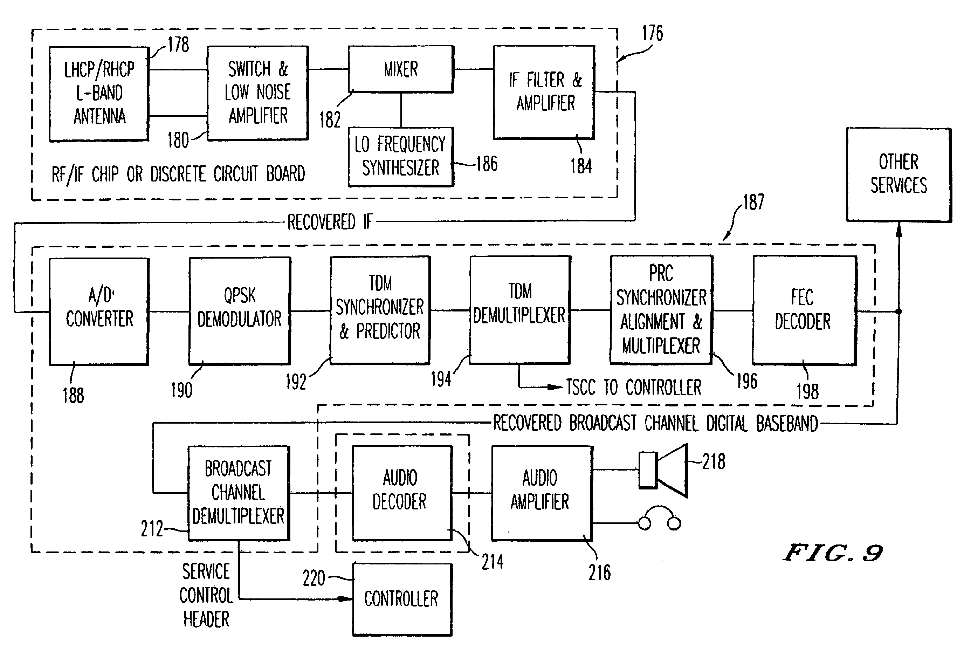

A radio receiver 29 for use in the system 10 will now be described with reference to Fig. 9. The radio receiver 29 comprises an radio frequency (RF) section 176 having an antenna 178 for L-band electromagnetic wave reception, and prefiltering to select the operating band of the receiver (e.g., 1452 to 1492 MHz). The RF section 176 further comprises a low noise amplifier 180 which is capable of amplifying the receive signal with minimum self-introduced noise and of withstanding interference signals that may come from another service sharing the operating band of the receiver 29. A mixer 182 is provided to down-convert the received spectrum to an intermediate frequency (IF). A high performance IF filter 184 selects the desired TDM carrier bandwidth from the output of the mixer 182 and a local oscillator synthesizer 186, which generates the mixing input frequencies needed to down-convert the desired signal to the center of the IF filter. The TDM carriers are located on center frequencies spaced on a grid having 460 kHz separations. The bandwidth of the IF filter 184 is approximately 2.5 MHz. The separation between carriers is preferably at least seven or eight spaces or approximately 3.3 MHz. The RF section 176 is designed to select the desired TDM carrier bandwidth with a minimum of internally- generated interference and distortion and to reject unwanted carriers that can occur in the operating band from 152 to 192 MHz. In most areas of the world, the levels of unwanted signals are nominal, and typically the ratios of unwanted signals to desired signals of 30 to 40 dB provides sufficient protection. In some areas, operations near high power transmitters (e.g., in the vicinity of terrestrial microwave transmitters for public switched telephone networks or other broadcast audio services) requires a front end design capable of better protection ratios. The desired TDM carrier bandwidth retrieved from the downlink signal using the RF section 176 is provided to an A/D converter 188 and then to a QPSK demodulator 190. The QPSK demodulator 190 is designed to recover the TDM bit stream transmitted from satellite 25, that is, via the on-board processor payload 121 or the on-board transparent payload 133, on a selected carrier frequency.

The QPSK demodulator 190 is preferably implemented by first converting the IF signal from the RF section 176 into a digital representation using the A/D converter 188, and then implementing the QPSK using a known digital processing method. Demodulation preferably uses symbol timing and carrier frequency recover and decision circuits which sample and decode the symbols of the QPSK modulated signal into the baseband TDM bit stream.

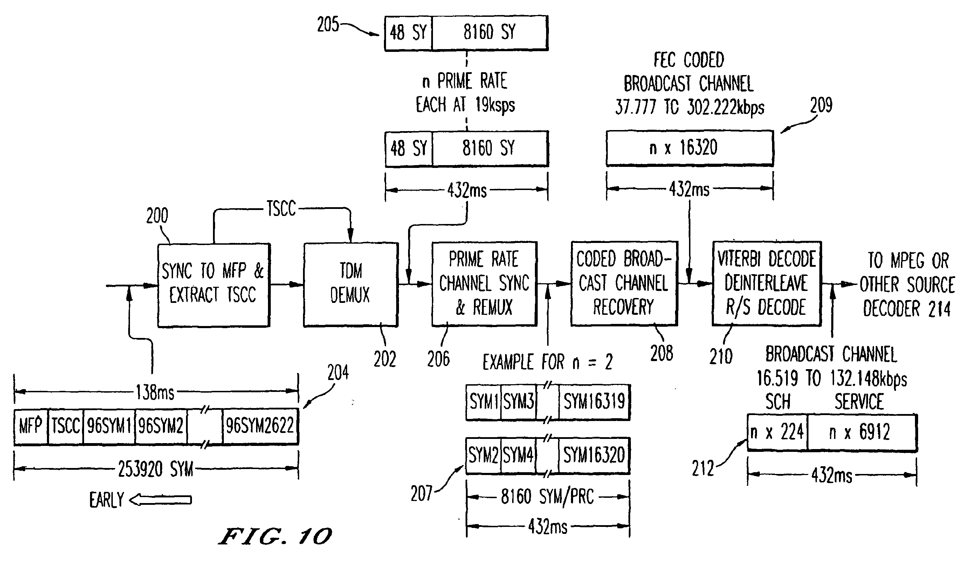

The A/D converter 188 and QPSK demodulator 190 are preferably provided on a channel recovery chip 187 for recovering the broadcast channel digital baseband signal from the IF signals recovered by the RF/IF circuit board 176. The channel recovery circuit 187 comprises a TDM synchronizer and predictor module 192, a TDM demultiplexer 194, a PRC synchronizer alignment and multiplexer 196, the operations of which will be described in further detail in connection with Fig. 10. The TDM bit stream at the output of the QPSK demodulator 190 is provided to a MFP synchronization correlator 200 in the TDM synchronizer and predictor module 192. The correlator 200 compares the bits of the received stream to a stored pattern. When no signal has previously been present at the receiver, the correlator 200 first enters a search mode in which it searches for the desired MFP correlation pattern without any time gating or aperture limitation applied to its output. When the correlator discovers a correlation event, it enters a mode wherein a gate opens at a time interval in which a next correlation event is anticipated. If a correlation event occurs again within the predicted time gate epoch, the time gating process is repeated. If correlation occurs for five consecutive time frames, for example, synchronization is declared to have been determined in accordance with the software. The synchronization threshold, however, can be changed. If correlation has not occurred for the minimum number of consecutive time frames to reach the synchronization threshold, the correlator continues to search for the correlation pattern.

Assuming that synchronization has occurred, the correlator enters a synchronization mode in which it adjusts its parameters to maximize probability of continued synchronization lock. If correlation is lost, the correlator enters a special predictor mode in which it continues to retain synchronization by prediction of the arrival of the next correlation event. For short signal dropouts (e.g., for as many as ten seconds), the correlator can maintain sufficiently accurate synchronization to achieve virtually instantaneous recovery when the signal returns. Such rapid recovery is advantageous because it is important for mobile reception conditions. If, after a specified period, correlation is not reestablished, the correlator 200 returns to the search mode. Upon synchronization to the MFP of the TDM frame, the TSCC can be recovered by the TDM demultiplexer 194 (block 202 in Fig. 10). The TSCC contains information identifying the program providers carried in the TDM frame and in which locations of the 96 PRCs each program provider's channel can be found. Before any PRCs can be demultiplexed from the TDM frame, the portion of the TDM frame carrying the PRC symbols is preferably descrambled. This is done by adding the same scrambling pattern at the receiver 29 that was added to the PRC portion of the TDM frame bit stream on-board the satellite 25. This scrambling pattern is synchronized by the TDM frame MFP.

The symbols of the PRCs are not grouped contiguously in the TDM frame, but are spread over the frame. There are 2622 sets of symbols contained in the PRC portion of the TDM frame. In each set, there is one symbol for each PRC in a position which is numbered in ascending order from 1 to 96. Thus, all symbols belonging to PRC 1 are in the first position of all 2622 sets. Symbols belonging to PRC 2 are in the second position of all 2622 sets, and so on, as shown in block 204. This arrangement for numbering and locating the symbols of the PRCs in the TDM frame, in accordance with the present invention, minimizes the size of the memory for performing the switching and routing on-board the satellite and for demultiplexing in the receiver. As shown in Fig. 9, the TSCC is recovered from the TDM demultiplexer 194 and provided to the controller 220 at the receiver 29 to recover the n PRCs for a particular broadcast channel. The symbols of the n PRCs associated with that broadcast channel are extracted from the unscrambled TDM frame time slot locations identified in the TSCC. This association is performed by a controller contained in the radio and is indicated generally at 205 in Fig. 10. The controller 220 accepts a broadcast selection identified by the radio operator, combines this selection with the PRC information contained in the TSCC, and extracts and reorders the symbols of the PRCs from the TDM frame to restore the n PRCs.

With reference to blocks 196 and 206, respectively, in Figs. 9 and 10, the symbols of each of the n PRCs (e.g., as indicated at 207) associated with a broadcast channel (e.g., as indicated at 209) selected by the radio operator are remultiplexed into an FEC-coded broadcast channel (BC) format. Before the remultiplexing is accomplished, the n PRCs of a broadcast channel are realigned. Realignment is useful because reclocking of symbol timing encountered in multiplexing, demultiplexing and on-board rate alignment in passage over the end-to-end link in system 10 can introduce a shift of as many as four symbols in the relative alignment of the recovered PRC frames. Each of the n PRCs of a broadcast channel has a 48 symbol preamble, followed by 8160 coded PRC symbols. To recombine these n PRCs into the broadcast channel, synchronization is performed to the 47, 48 or 49 symbol header of each of the PRCs. The length of the header depends on the timing alignment performed on the uplink PRCs on the satellite 25. Synchronization is accomplished using a preamble correlator operating on the 47 most recently received symbols of the PRC header for each of the n PRCs. The preamble correlator detects incidents of correlation and emits a single symbol duration correlation spike. Based on the relative time of occurrence of the correlation spikes for the n PRCs associated with the broadcast channel, and operating in conjunction with alignment buffers having a width of four symbols, the symbol content of the n PRCs can be precisely aligned and remultiplexed to recover the FEC-coded broadcast channel. Remultiplexing of the n PRCs to reform the FEC-coded broadcast channel preferably requires that the symbol spreading procedure used at the broadcast station 23 for demultiplexing the FEC-coded broadcast channel into the PRCs be performed in the reverse order, as indicated in blocks 206 and 208 of Fig. 10.

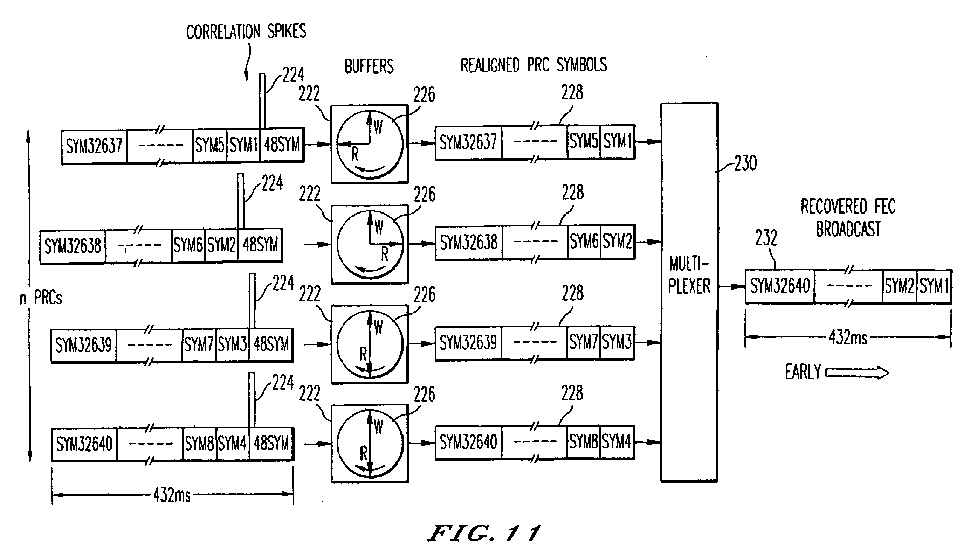

Fig. 11 illustrates how a broadcast channel, comprising four PRCs, for example, is recovered at the receiver (block 196 in Fig. 9). At the left, four demodulated PRCs are shown arriving. Due to reclocking variations, and different time delays encountered from the broadcast station through the satellite to the radio, up to four symbols of relative offset can occur among the n PRCs constituting a broadcast channel. The first step in recovery is to realign the symbol content of these PRCs. This is done by a set of FIFO buffers each having a length equal to the range of variation. Each PRC has its own buffer 222. Each PRC is first supplied to a PRC header correlator 226 that determines the instant of arrival. The arrival instants are shown by a correlation spike 224 for each of the four PRCs in the illustration. Writing (W) starts into each buffer 222 immediately following the instant of correlation and continues thereafter until the end of the frame. To align the symbols to the PRCs, reading (R) from all of the buffers 222 starts at the instant of the last correlation event. This causes the symbols of all PRCs to be synchronously read out in parallel at the buffer 222 outputs (block 206). The realigned symbols 228 are next multiplexed via a multiplexer 230 into a single serial stream that is the recovered coded broadcast channel 232 (block 208). Due to on-board clock 152 rate alignment, the length of the PRC header may be 47, 48 or 49 symbols long. This variation is eliminated in the correlator 226 by using only the last 47 symbols to arrive to detect the correlation event. These 47 symbols are specially selected to yield optimum correlation detection.

With reference to block 198 and 210 of Figs. 9 and 10 respectively, the FEC-coded broadcast channel is subsequently provided to the FEC processing module 210. Most of the errors encountered in transmission between the location of the coders and the decoders is corrected by FEC processing. FEC processing preferably employs a Viterbi Trellis Decoder, followed by deinterleaving and then a Reed Solomon decoder. FEC processing recovers the original broadcast channel comprising n x 16 kbps channel increments and its n x 224 bit SCH (block 212).

The n x 16 kbps segment of the broadcast channel is provided to a decoder such as MPEG 2.5 Layer 3 source decoder 214 for conversion back to audio signals. Thus, receiver processing is available using a low cost radio for broadcast channel reception from satellites. Since the transmissions of the broadcast programs via satellites 25 is digital, a number of other services are supported by the system 10 which are also expressed in digital format. As stated previously, the SCH contained in the broadcast channels provides a control channel for a wide variety of future service options. Thus, chip sets can be produced to implement these service options by making the entire TDM bit stream and its raw demodulated format, the demultiplexed TSCC information bits, and the recovered error corrected broadcast channel available. Radio receivers 29 can also be provided with an identification code for uniquely addressing each radio. The code can be accessed by means of bits carried in a channel of the SCH of the broadcast channel. For mobile operation using the radio receiver 29 in accordance with the present invention, the radio is configured to predict and recover substantially instantaneously the locations of MFP correlation spikes to an accuracy of 1/4th symbol for intervals of as many as ten seconds. A symbol timing local oscillator having a short time accuracy of better than one part per 100,000,000 is preferably installed in the radio receiver, particularly for a hand-held radio 29b.

### System for Managing Satellite and Broadcast Stations

As stated previously, the system 10 can comprise one or a plurality of satellites 25. Fig. 12 depicts three satellites 25a, 25b and 25c for illustrative purposes. A system 10 having several satellites preferably comprises a plurality of TCR stations 24a, 24b, 24c, 24d and 24e located such that each satellite 25a, 25b and 25c is in line of sight of two TCR stations. The TCR stations referred to generally with reference numeral 24 are controlled by a regional broadcast control facility (RBCF) 238a, 238b or 238c. Each RBCF 238a, 238b and 238c comprises a satellite control center (SCC) 236a, 236b and 236c, a mission control center (MCC) 240a, 240b and 240c, and a broadcast control center (BCC) 244a, 244b and 244c, respectively. Each SCC controls the satellite bus and the communications payload and is where a space segment command and control computer and manpower resources are located. The facility is preferably manned 24 hours a day by a number of technicians trained in in-orbit satellite command and control. The SCCs 236a, 236b and 236c monitor the on-board components and essentially operate the corresponding satellite 25a, 25b and 25c. Each TCR station 24 is preferably connected directly to a corresponding SCC 236a, 236b or 236c by full-time, dual redundant PSTN circuits.

In each of the regions serviced by the satellites 25a, 25b and 25c, the corresponding RBCF 238a, 238b and 238c reserves broadcast channels for audio, data, video image services, assigns space segment channel routing via the mission control center (MCC) 240a, 240b, 240c, validates the delivery of the service, which is information required to bill a broadcast service provider, and bills the service provider.

Each MCC is configured to program the assignment of the space segment channels comprising uplink PRC frequency and downlink PRC TDM slot assignments. Each MCC performs both dynamic and static control. Dynamic control involves controlling time windows for assignments, that is, assigning space segment usage on a monthly, weekly and daily basis. Static control involves space segment assignments that do not vary on a monthly, weekly and daily basis. A sales office, which has personnel for selling space segment capacity at the corresponding RBCF, provides the MCC with data indicating available capacity and instructions to seize capacity that has been sold. The MCC generates an overall plan for occupying the time and frequency space of the system 10. The plan is then converted into instructions for the on-board routing switch 172 and is sent to the SCC for transmission to the satellite. The plan can be updated and transmitted to the satellite preferably once every 12 hours. The MCC 240a, 240b and 240c also monitors the satellite TDM signals received by corresponding channel system monitor equipment (CSME) 242a, 242b and 242c. CSME stations verify that broadcast stations 23 are delivering broadcast channels within specifications.

Each BCC 244a, 244b and 244c monitors the broadcast earth stations 23 in its region for proper operation within selected frequency, power and antenna pointing tolerances. The BCCs can also connect with corresponding broadcast stations to command malfunctioning stations off-the-air. A central facility 246 is preferably provided for technical support services and back-up operations for each of the SCCs.

While certain advantageous embodiments have been chosen to illustrate the invention, it will be understood by those skilled in the art that various changes and modifications can be made therein without departing from the scope of the invention as defined in the appended claims.

## Claims

1. A receiver unit (29) for receiving a time division multiplexed downlink data stream from a satellite (25) comprising:
a demodulator (190) for demodulating said downlink data stream into a stream of symbols, said downlink data stream comprising time slots having a plurality of time slot locations and being provided with a predetermined number of prime rate channels by said satellite (25), said prime rate channels each comprising a plurality of symbols, each of said plurality of symbols being assigned, respectively, to said time slots to spread said plurality of symbols corresponding to each of said prime rate channels over said downlink data stream, said plurality of symbols for each of said prime rate channels being assigned to the corresponding one of said plurality of time slot locations in each of said time slots;
a demultiplexer (194) connected to said demodulator for locating a time slot control channel inserted into said stream of symbols by said satellite (25) to identify which of said plurality of time slot locations comprises said plurality of symbols of at least one of said prime rate channels corresponding to a selected broadcast service provider;
an extraction device (220,205) for extracting said plurality of symbols corresponding to said at least one prime rate channel of said selected broadcast service provider from said stream of symbols in accordance with said time slot control channel; and
a multiplexer (196) for multiplexing said plurality of symbols corresponding to said selected broadcast service provider into a serial broadcast channel data stream.

2. A receiver unit (29) as claimed in claim 1, wherein said broadcast service provider uses a plurality of said prime rate channels, and further comprising a realignment device (196) connected to said extraction device (220, 205) and configured to align said plurality of said prime rate channels with respect to each other.

3. A receiver unit (29) as claimed in claim 2, wherein each of said prime rate channels comprises a header and said realignment device (196) comprises:
a buffer (222) for each of said plurality of said prime rate channels; and
a correlator (200) connected to said buffer and configured to determine the instant of arrival of said header of a corresponding one of said prime rate channels and to commence writing of said prime rate channel into said buffer, said buffer for each of said plurality of said prime rate channels being read from after the instant of arrival of said header corresponding to the last of said prime rate channels is detected to generate said serial broadcast channel data stream.

4. A receiver unit (29) as claimed in claim 1,
wherein said demodulator (190) is a phase shift keying demodulator for demodulating said downlink data stream into a stream of symbols, said downlink data stream being provided with a predetermined number of prime rate channels in respective ones of said slots by said satellite (25);
the receiver unit (29) further comprising:
a correlator (192,200) connected to said demodulator (190) for locating and synchronizing to a master frame preamble inserted in said stream of symbols by said satellite (25), said correlator (192, 200) being configured to store a master frame correlation pattern corresponding to said master frame preamble and programmable to operate in one of a search mode, a predictive mode and a synchronized mode;
said demultiplexer (194) being connected to said correlator (192, 200) for locating a time slot control channel in said stream of symbols, said time slot control channel being inserted into said stream of symbols by said satellite (25) to identify which of said slots comprises said prime rate channels corresponding to each of a plurality of broadcast service providers; and
an input device (29) configured to allow an operator to select one of said broadcast service providers and operable to provide an output signal to said demultiplexer (194), said demultiplexer (194) being operable to extract selected ones of said prime rate channels using said time slot control channel and output signal;
wherein said correlator (192,200) is configured to operate in said predictive mode employing one of a time gate and an aperture limitation corresponding to a predicted time interval for the next correlation event at an output of said correlator (192, 200) when said correlator (192, 200) detects said master frame correlation pattern, and to operate in said search mode without employing either of said time gate and said aperture limitation when said master frame correlation pattern is not detected.

5. A receiver unit (29) as claimed in claim 4, wherein said correlator (192, 200) is configured to operate in said synchronized mode when said master frame correlation pattern is detected for a predetermined minimum number of consecutive time frames of said downlink data stream, and to operate in said predictive mode when said master frame correlation pattern is not detected while operating in said synchronized mode, said correlator (192, 200) maintaining operation in said synchronized mode using a predicted time interval for determining another said master frame correlation pattern.

6. A receiver unit (29) as claimed in claim 5, wherein said correlator (192,200) is configured to return to operating in said search mode when said master frame correlation pattern is not detected for a predetermined minimum number of consecutive time frames of said downlink data stream during said predictive mode.

7. A receiver unit (29) as claimed in claim 1:
wherein said demodulator (190) is a phase shift keying demodulator for demodulating said downlink data stream into a stream of symbols, said downlink data stream being provided with a predetermined number of prime rate channels in respective ones of said time slots by said satellite (25);
and further comprising a correlator (192,200) connected to said demodulator for locating and synchronizing to a master frame preamble inserted in said stream of symbols by said satellite, said demultiplexer (194) being connected to said correlator for locating said time slot control channel in said stream of symbols, said time slot control channel being inserted into said stream of symbols by said satellite (25) to identify which of said time slot locations comprises said plurality of symbols of at least one of said prime rate channels corresponding to each of a plurality of broadcast service providers; and
an input device (29) configured to allow an operator to select one of said broadcast service providers and operable to provide an output signal to said demultiplexer, said demultiplexer being operable to extract selected ones of said prime rate channels using said time slot control channel and output signal.

8. A receiver unit (29) as claimed in claim 1, further comprising a radio receiver (29) for receiving one of a plurality of prime rate channels transmitted via downlink signals from a satellite (25), the radio receiver (29) comprising:
a radio frequency device (176) for receiving said downlink signals;
a channel recovery device (187) for recovering said prime rate channels from said downlink signals by demodulating said downlink signals into a baseband time division multiplexed bit stream comprising frames generated by said satellite (25), each of said frames comprising a plurality of time slots, each of said time slots comprising a set of symbols, each symbol in said set of symbols corresponding to a respective one of said prime rate channels occupying a similar symbol position in each of said time slots, locating said frames in said bit stream using a master frame preamble inserted in said bit stream by said satellite (25), retrieving from said set of symbols in each of said time slots of at least one of said frames the symbols that correspond to at least one of said prime rate channels, remultiplexing said symbols corresponding to said at least one of said prime rate channels to recover a broadcast channel corresponding thereto and as originally transmitted to said satellite (25), and extracting a service control header from said broadcast channel; and
a controller (220), said controller being operable to receive said service control header from said channel recovery device (187) and control said radio receiver (29) to perform a plurality of functions comprising operating said radio receiver (29) in a selected reception mode to provide a selected multimedia service, to display data, to display an image, to decrypt data using a decryption key provided in said service control header, and to respond to an identification code provided in said service control header to uniquely address said radio receiver (29).

9. A receiver unit (29) as claimed in claim 1, wherein a system manages a satellite (25) and a number of broadcast stations (23) for generating programs for transmission to remote radio receiver units on broadcast channels via the satellite (25), the system comprising:
a satellite control system (238) configured to generate control signals for controlling the attitude and orbit of said satellite (25), and data processing control signals for controlling on-board processing of said programs uplinked to said satellite (25) via said broadcast stations and routing to downlink time division multiplexed carriers;
at least one telemetry, range and control system (24) connected to said satellite control system (238) and configured to communicate with said satellite (25) to provide said control signals and said data processing signals from said satellite control system (238) to said satellite (25) ; and
a mission control system (240) connected to said satellite control system (238) and to said broadcast stations, said mission control system (240) being operable to assign selected ones of said broadcast channels to service providers desiring to transmit at least one of said programs via said satellite (25), to store channel data relating to said assignments of said broadcast channels and provide said channel data to said satellite control system (238), and to bill said service providers according to the number of said broadcast channels assigned thereto, said mission control system (240) providing said service providers with a plurality of options comprising number of said broadcast channels to be reserved for uplink transmission, dates and times of day for using said reserved broadcast channels, and which of a number of time division multiplexed signals in a number of beams associated with said satellite (25) are to be used for downlink transmission, said mission control system (2₄0) being operable to indicate to said satellite control system (238) which of time division multiplexed signals in said beams are to be used and said satellite control system (238) generating corresponding said data processing signals for routing of said program to selected ones of said beams.

10. A unit as claimed in claim 9, wherein said broadcast channels correspond to frequency locations in a predetermined radio frequency spectrum and said mission control system (240) is programmable to assign noncontiguous ones of said broadcast channels to one of said service providers.

11. A unit as claimed in claim 10, wherein said mission control system is (240) operable to perform a defragmentation process to reassign said service providers to different broadcast channels to optimize the use of the satellite uplink spectrum.

12. A unit as claimed in claim 9, further comprising a channel service monitor (242) connected to said mission control system (240), said mission control system (240) being operable to validate delivery of said programs with sufficient signal strength and sufficiently low bit error rate using said channel service monitor prior to billing said service providers.

13. A unit as claimed in claim 9, further comprising a broadcast control center (244) for monitoring and controlling said broadcast stations to maintain performance of said broadcast stations within predetermined tolerances regarding carrier frequency assignments, antenna power levels and antenna pointing.

14. A unit as claimed in claim 9, further comprising a broadcast control center (244) for monitoring and controlling said broadcast stations and being operable to instruct said broadcast stations to terminate use of said broadcast channels.

15. A unit as claimed in claim 9, further comprising a broadcast control center (244) for monitoring and controlling said broadcast stations and being operable to generate and transmit a command to at least one of said broadcast stations to power down said broadcast station.

16. A receiver unit as claimed in claim 1, wherein a system manages a satellite (25) and a number of broadcast stations for generating programs for transmission to remote radio receiver units (29) via the satellite (25), the system comprising:
a satellite control system (236) configured to generate control signals for controlling the operation of said satellite (25), said satellite (25) being configured to receive an uplink comprising frequency division multiple access channels and to generate at least two time division multiplexed downlink signals, each of said signals comprising a plurality of time slots, said broadcast stations being operable to modulate said programs into prime rate increments for transmission on selected ones of said frequency division multiple access channels, said satellite (25) being further configured to route said prime rate increments to selected ones of said time slots in accordance with said control signals;
a mission control system (240) connected to said satellite control system (236) and to said broadcast stations, said mission control system (240) being operable to assign selected ones of said frequency division multiple access channels to service providers desiring to transmit said prime rate increments via said satellite (25), to assign at least one of said time division multiplexed signals for downlink transmission of said prime rate increments, to store channel data relating to said assignments of said frequency division multiple access channels and said time division multiplexed signals and to provide said channel data to said satellite control system (236) for generating said control signals; and
at least one telemetry, range and control system (24) connected to said satellite control system (236) and configured to communicate with said satellite (25) to provide said control signals from said satellite control system (236) to said satellite (25).

17. A unit as claimed in claim 16, wherein said mission control system (240) is programmable to assign noncontiguous ones of said frequency division multiple access channels to one of said service providers.

18. A unit as claimed in claim 16, wherein said system (240) is operable to validate successful transmission of said prime rate increments via at least one of time division multiplexed signals prior to generating respective bills for corresponding said service providers.

19. A unit as claimed in claim 16, wherein said mission control system (240) is operable to perform dynamic control by assigning selected ones of said frequency division multiple access channels for periodic and temporary usage by at least a selected one of said service providers on one of a monthly, weekly and daily basis.

20. A unit as claimed in claim 16, wherein said mission control system (240) is operable to perform static control by assigning selected ones of said frequency division multiple access channels to selected ones of said service providers for substantially constant and exclusive use.

21. A unit as claimed in claim 16, further comprising a broadcast control system (244) connected to said broadcast stations and operable to monitor said broadcast stations to determine if said broadcast stations are performing within predetermined tolerances relating to at least one of frequency, power and the direction of an antennae connected to respective said broadcast stations.

22. A unit as claimed in claim 16, further comprising a broadcast control system (244) connected to said broadcast stations and operable to monitor said broadcast stations to determine if said broadcast stations are performing within predetermined tolerances, and to generate and transmit a command to at least one of said broadcast stations to power down said broadcast station.

23. A receiver unit as claimed in claim 4, wherein a satellite (25) comprises an apparatus for switching symbols in parallel broadcast channels transmitted as respective frequency division multiple access carriers to time division multiplexed data streams, the apparatus comprising:
first and second ping-pong buffers (156a, 156b), said first ping-pong buffer (156a) being configured to store a first plurality of said symbols in said parallel broadcast channels therein, said second ping-pong buffer (156b) being operable to store a second plurality of said symbols in said parallel broadcast channels therein, said second plurality of said symbols in said parallel broadcast channels having arrived at said second ping-pong buffer (156b) prior to the arrival of said first plurality of said symbols in said parallel broadcast channels at said first ping-pong buffer (156a);
a routing switch (172) connected to the outputs of said first and second ping-pong buffers (156a, 156b); and
a first frame assembler (160) connected to said routing switch (172), said routing switch (172) being operable to control the writing of the contents of said second ping-pong buffer (156b) to said first frame assembler (160).

24. A unit as claimed in claim 23, further comprising a second frame assembler (162) connected to said routing switch (172), said routing switch (172) being operable to control the writing of the contents of said second ping-pong buffer (156b) to at least one of said first frame assembler (160) and said second frame assembler (162).

25. A unit as claimed in claim 24, wherein said routing switch (172) is operable control the writing of the contents of said second ping-pong buffer (156b) to both of said first frame assembler (160) and said second frame assembler (162) to generate two parallel time division multiplexed data streams.

26. A unit as claimed in claim 23, wherein said second ping-pong buffer (156b) is operable to store at third plurality of said broadcast channels, said routing switch (172) being operable to control the writing of the contents of said first ping-pong buffer (156a) to said first frame assembler (162).

27. A unit as claimed in claim 23, wherein said first ping-pong buffer (156a) is operable to switch as few as a single one of said first plurality of said symbols therein at one time.

28. A unit as claimed in claim 23, wherein said second ping-pong buffer (156b) is operable to switch as few as a single one of said second plurality of said symbols therein at one time.

29. A unit as claimed in claim 23, wherein said first frame assembler (160) is operable to insert at least one framing bit in said second ping-pong buffer (156b) to identify said symbols stored in said second ping-pong buffer (156b) as a frame.

30. A unit as claimed in claim 29, wherein said frame comprises time slots and said first frame assembler (160) is operable to insert at least one bit representing a time slot control channel (170) in said second ping-pong buffer (156b) to indicate in which of said time slots said symbols corresponding to respective ones of said parallel broadcast channels are stored.

31. A unit as claimed in claim 23, wherein said apparatus is on-board a satellite (25) and said routing switch (172) is controllable via control signals generated by a ground station and transmitted to said satellite (25).

32. A unit as claimed in claim 24, wherein said second frame assembler (162) stores at least one framing bit to identify said symbols stored therein as a frame.

33. A unit as claimed in claim 32, wherein said frame comprises time slots and said second frame assembler (162) stores at least one bit representing a time slot control channel (170) to indicate in which of said time slots said symbols corresponding to respective ones of said parallel broadcast channels are stored.

34. A receiver unit as claimed in claim 1, wherein a satellite payload processing system processes an uplink signal consisting of a plurality of single-channel-per-carrier, frequency division multiple access carriers into digital baseband bits for transmission to said receiver unit (29), comprising;
a polyphase demultiplexer processor (144) for separating said uplink signal into a time division multiplexed data stream of symbols and presenting said symbols corresponding to each of a plurality of carriers at respective ones of said frequencies in said uplink signal sequentially to an output of said polyphase demultiplexer processor (144);
a phase shift keying demodulator (146) connected to said output of said polyphase demultiplexer processor (144) for demodulating said stream of symbols into corresponding time division multiplexed stream of digital baseband bits; and
a rate alignment device (150) for processing said time division multiplexed stream of digital base band bits to compensate for rate differences between an onboard clock (152) and said symbols corresponding to each of said plurality of carriers received at said satellite (25), and demultiplexing said time division multiplexed stream into parallel, rate-aligned channels.

35. A unit as claimed in claim 34, further comprising a differential decoder (146) connected to said phase shift keying demodulator (146) for recovering said stream of symbols when said stream of symbols is differentially encoded for said uplink carrier signal.

36. A unit as claimed in claim 34, wherein said phase shift keying demodulator (146) is a quadrature phase shift keying demodulator for demodulating each of said symbols into two corresponding bits.

37. A unit as claimed in claim 34, further comprising a switching and routing processor (172) for routing said channels into at least one of a plurality of time division multiplexed downlink carriers.

38. A receiver unit as claimed in claim 1, wherein a rate alignment apparatus for a satellite (25) processes digital baseband bits for transmission to said receiver unit (29), the rate alignment apparatus comprising:
an on-board clock (152);
an input switch (161);
an output switch (163);
a ping-pong buffer pair (153) comprising first and second buffers (149,151) and connected to said input switch (161) and said output switch (163), said first and second buffers (149, 151) receiving a stream of digital baseband symbols recovered from an uplink signal depending on the operation of said input switch (161) and said output switch (163), said first buffer (149) of said buffer pair (153) receiving said bits in accordance with an uplink clock rate obtained from said uplink signal, said second buffer (151) of said buffer pair (153) substantially simultaneously emptying the stored contents thereof in accordance with said on-board clock (152), the operations of said first and second buffers (149, 151) being reversed upon actuation of said input switch (161) and said output switch (163);
first and second correlators (155) connected to said first and second buffers (149, 151), respectively, and operable to generate a spike when a header denoting a frame in said stream of baseband symbols is detected, said buffer pair (153) being operable to continue to write said stream of baseband symbols into one of said buffer pair (149, 151) until said spike occurs, said input switch (161) and said output switch (163) being switched to the reverse states thereof, said first and second buffer (149, 151) receiving said uplink signal being read to the output thereof in accordance with said on-board clock rate;
a synchronized pulse oscillator (157) connected to said first and second correlators (155) and operable to generate a smoothed pulse for each of said symbols read to said output and
a counter (159) connected to said oscillator (157) to count said smoothed pulses, a number of bits being added to and removed from said headers of said streams in accordance with the value of said counter (159).

39. A unit as claimed in claim 38, further comprising a receive symbol clock connected to said first buffer and said second buffer (149,151) and operable to enable whichever one of said first buffer and said second buffer (149, 151) that is currently connected to said input switch (161) to receive said symbols recovered from said uplink signal.

40. A unit as claimed in claim 38, further comprising an on-board symbol clock (152) connected to said first buffer and said second buffer (149, 151) and operable to enable whichever one of said first buffer (149) and said second buffer (151) is currently connected to said output switch (163) to output said symbols stored therein.

41. A method of recovering at least one prime rate channel from among several prime rate channels transmitted in a time division multiplexed downlink data stream from a satellite (25) comprising the steps of:
demodulating (190) said downlink data stream into a stream of symbols, said downlink data stream comprising time slots having a plurality of time slot locations and being provided with a predetermined number of prime rate channels by said satellite (25), said prime rate channels each comprising a plurality of symbols, each of said plurality of symbols being assigned, respectively, to said time slots to spread said plurality of symbols corresponding to each of said prime rate channels over said downlink data stream, said plurality of symbols for each of said prime rate channels being assigned to the corresponding one of said plurality of time slot locations in each of said time slots;
demultiplexing (194) said stream of symbols to locate a time slot control channel inserted therein by said satellite (25) to identify which of said plurality of time slot locations comprises said plurality of symbols of at least one of said prime rate channels corresponding to a selected broadcast service provider;
extracting (220,205) said plurality of symbols corresponding to said at least one prime rate channel of said selected broadcast service provider from said stream of symbols in accordance with said time slot control channel; and
multiplexing (196) said plurality of symbols corresponding to said selected broadcast service provider into a serial broadcast channel data stream.

42. A method as claimed in claim 41, wherein said broadcast service provider uses a plurality of said prime rate channels, and further comprising the step of aligning (196) said plurality of said prime rate channels with respect to each other prior to multiplexing said plurality of symbols corresponding to said plurality of prime rate channels.

43. A method as claimed in claim 42, wherein each of said prime rate channels comprises a header and said aligning step comprises the steps of:
writing each of said plurality of said prime rate channels into respective buffers (222) upon determination (224) of the respective instances of arrival of said headers; and
reading from said buffers (222) upon determination of the last of said instances of arrival.

44. A method as claimed in claim 41, further comprising the steps of:
demodulating (190) said downlink data stream into a baseband time division multiplexed (TDM) bit stream comprising frames generated by said satellite (25), each of said frames comprising a plurality of said time slots, each of said time slots comprising a set of said symbols, each symbol in said set of symbols corresponding to a respective one of said prime rate channels occupying a similar symbol position in each of said time slots;
locating (192) said frames in said baseband TDM bit stream using a master frame preamble inserted in said baseband TDM bit stream by said satellite (25);
retrieving (194) from said set of symbols in each of said time slots of at least one of said frames the symbols that correspond to at least one of said prime rate channels; remultiplexing (196,206,208) said symbols corresponding to said at least one of said prime rate channels to recover a broadcast channel corresponding thereto and as originally transmitted to said satellite (25); and
extracting (220,205) a service control header from said broadcast channel.

45. A method as claimed in claim 44, wherein said retrieving step comprises the steps of:
locating (194) a time slot control channel inserted in said bit stream by said satellite (25), said control channel indicating which of said time slots contain said symbols corresponding to each of said prime rate channels; and
extracting (220,205) said symbols corresponding to one of said prime rate channels selected by using said control channel.

46. The method as claimed in claim 44, further comprising the step of determining (220,212) if said service control header comprises an identification code inserted in said broadcast channel by a broadcast station prior to transmission to said satellite (25) for uniquely addressing a radio receiver (29).

47. The method as claimed in claim 44, further comprising the steps of:
determining (220,212) if said service control header comprises control data; and
operating a radio receiver (29) to perform at least one of a plurality of functions depending on said control data, said plurality of functions comprising operating said radio receiver in a selected reception mode to provide a selected multimedia service, to display data, to display an image, and to decrypt data using a decryption key provided in said service control header.

48. A method as claimed in claim 41, wherein a broadcast program from a broadcast service provider is transmitted to one or more remote receiver units (29), further comprising the steps of:
assembling bits (26) corresponding to at, least a portion of said program into a first number of prime rate increments having uniform and predetermined rates;
generating (28,94) a frame (100) having a predetermined duration and comprising each of said prime rate increments and a frame header (102),
dividing said frame (100) into symbols (114), each of said symbols comprising a predetermined and consecutive number of said bits;
demultiplexing (32,82) said symbols (114) of said frame (100) into a second number of parallel prime rate channels, each of said prime rate channels having the same said predetermined duration as said frame (100), said symbols (114) being provided in a predetermined order across said prime rate channels to separate consecutive ones of said symbols (114), each of said prime rate channels comprising a prime rate channel synchronization header for recovering said prime rate channels at said remote receiver units (29); and
modulating (86) said prime rate channels onto a corresponding number of uplink carrier frequencies for broadcast transmission.

49. A method as claimed in claim 48, wherein said frame header (102) comprises bits for controlling said receiver unit (29).

50. A method as claimed in claim 48, wherein said program is **characterized by** two services and further comprising the step of dividing (26) at least one of said prime rate increments into two parts for carrying said bits corresponding to said two services, respectively.

51. A method as claimed in claim 48, wherein said second number of prime rate channels corresponds to said first number of prime rate increments.

52. A method as claimed in claim 48, wherein said modulating step (26) comprises the step of modulating each of said prime rate channels using a plurality of quadrature phase shift keying modulators.

53. A method as claimed in claim 52, wherein said symbols (114) each comprise two of said bits.

54. A method as claimed in claim 52, wherein said second number of prime rate channels and said plurality of quadrature phase shift keying modulators (86) corresponds in number to said first number of prime rate increments.

55. A method as claimed in claim 48, wherein said predetermined order is ascending order.

56. A method as claimed in claim 42, wherein a broadcast program from a broadcast service provider is transmitted to one or more remote receiver units (29), further comprising the steps of:
assembling (26) said program into a first integer number of prime rate increments having a uniform and predetermined rate;
generating (28) a frame (100) of bits having a predetermined duration and comprising each of said prime rate increments and a frame header (102);
encoding (30,80) said frame to generate an encoded frame comprising bits encoded for forward error correction protection;
dividing said encoded frame into symbols (114), each of said symbols (114) comprising a predetermined and consecutive number of said bits;
demultiplexing (82) said symbols into a second number of parallel prime rate channels, said symbols (114) being provided in a predetermined order across said prime rate channels to separate consecutive ones of said symbols (114), each of said prime rate channels comprising a prime rate channel synchronization header for recovering said prime rate channels at said remote receiver units; and
modulating (86) said prime rate channels onto a corresponding number of uplink carrier frequencies for broadcast transmission.

57. A method as claimed in claim 56, wherein said encoding step (30,80) involves at least one encoding scheme selected from the group consisting of Reed Solomon coding, interleaving, and Trellis convolution coding.

58. A method as claimed in claim 56, wherein said encoding step (30,80) comprises the steps of:
coding said frame (100) in accordance with a first coding scheme to generate a first coded frame;
interleaving said first coded frame to generate an interleaved coded frame; and coding said interleaved coded frame using a second coding scheme.

59. A method as claimed in claim 58, wherein said first coding scheme is a Reed Solomon coding scheme.

60. A method as claimed in claim 58, wherein said second coding scheme is a trellis convolutional coding scheme.

61. A method as claimed in claim 56, wherein said predetermined order is ascending order.

62. A method as claimed in claim 41, wherein the rate of uplink symbols are aligned to an on-board clock (152) on the satellite (25) for digital baseband processing prior to transmission via a time division multiplexed downlink stream, the alignment comprising the steps of:
filling a buffer (149,151) with a plurality of said symbols at a received symbol rate;
correlating (155) said symbols in said buffer into frames by comparing a header inserted amongst said symbols with a unique framing word to locate said header amongst said plurality of symbols which is stored in said buffer (149, 151) and generating correlation spikes when said header is located,
counting (159) the number of clock ticks generated by an on-board symbol clock between said correlation spikes; and adjusting the length (159) of said header (112) in said buffer to compensate for a rate difference between said received symbol rate and said on-board symbol rate.

## Patentansprüche

1. Empfängereinheit (29) für den Empfang eines Zeitmultiplex-Datenstroms auf der Abwärtsstrecke von einem Satelliten (25), wobei die Einheit enthält:
einen Demodulator (190), um den Datenstrom auf der Abwärtsstrecke in einen Strom von Symbolen zu decodieren, wobei der Datenstrom auf der Abwärtstrecke Zeitschlitze enthält, die eine Vielzahl von Zeitschlitz-Orten besitzen und vom Satelliten (25) mit einer vorgegebenen Anzahl von Basiskanälen (prime rate channels) versehen werden, wobei jeder der Basiskanäle eine Vielzahl von Symbolen enthält, wobei jedes Symbol aus der Vielzahl von Symbolen jeweils den Zeitschlitzen zugeordnet ist, um die Vielzahl von Symbolen, die jedem der Basiskanäle entsprechen, über den Datenstrom auf der Abwärtsstrecke zu verteilen, wobei die Vielzahl von Symbolen für jeden der Basiskanäle einem entsprechenden Ort aus der Vielzahl von Zeitschlitz-Orten in jedem der Zeitschlitze zugeordnet ist;
einen Demultiplexer (194), der mit dem Demodulator verbunden ist, um einen Zeitschlitz-Steuerkanal zu lokalisieren, der vom Satelliten (25) in den Strom von Symbolen eingesetzt wird, um zu erkennen, welcher Ort aus der Vielzahl von Zeitschlitz-Orten die Vielzahl von Symbolen von zumindest einem Kanal aus der Vielzahl von Basiskanälen enthält, der einem ausgewählten Sendeprogrammanbieter entspricht;
eine Auszieh-Einrichtung (220, 205), um die Vielzahl von Symbolen, die dem zumindest einen Basiskanal der ausgewählten Sendeprogrammanbieter entsprechen, aus dem Strom von Symbolen in Übereinstimmung mit dem Zeitschlitz-Steuerkanal heraus zu ziehen; und
einen Multiplexer (196), um die Vielzahl von Symbolen, die dem ausgewählten Sendeprogrammbetreiber entsprechen, in einen seriellen Sendekanal-Datenstrom zu multiplexen.

2. Empfängereinheit (29) gemäß Anspruch 1, wobei der Sendeprogrammanbieter eine Vielzahl von Basiskanälen verwendet, und wobei die Einheit weiters eine Neuordnungs-Einrichtung (196) enthält, die mit der Auszieh-Einrichtung (220, 205) verbunden und so aufgebaut ist, dass sie die Vielzahl von Basiskanälen zueinander ausrichtet.

3. Empfängereinheit (29) gemäß Anspruch 2, wobei jeder der Basiskanäle einen Nachrichtenkopf (header) enthält, und
wobei die Neuordnungs-Einrichtung (196) enthält:
einen Pufferspeicher (222) für jeden Kanal aus der Vielzahl von Basiskanälen; und
einen Korrelator (200), der mit dem Pufferspeicher verbunden und so aufgebaut ist, um den Zeitpunkt des Eintreffens des Nachrichtenkopfs eines entsprechenden Basiskanals zu bestimmen und mit dem Einschreiben des Basiskanals in den Pufferspeicher zu beginnen, wobei der Pufferspeicher für jeden Kanal aus der Vielzahl der Basiskanäle ab dem Zeitpunkt ausgelesen wird, nachdem das Eintreffen des Nachrichtenkopfs abgetastet wurde, der dem letzten der Basiskanäle entspricht, um den seriellen Sendekanal-Datenstrom zu erzeugen.

4. Empfängereinheit (29) gemäß Anspruch 1,
wobei der Demodulator (190) ein Phasenmodulations-Demodulator ist, um den Datenstrom auf der Abwärtsstrecke in einen Strom von Symbolen zu demodulieren, wobei der Datenstrom auf der Abwärtsstrecke in einem entsprechenden Schlitz vom Satelliten (25) mit einer vorgegebenen Anzahl von Basiskanälen versehen wird;
wobei die Empfängereinheit (29) weiters enthält:
einen Korrelator (192, 200), der mit dem Demodulator (190) verbunden ist, um eine Masterframe-Präambel zu lokalisieren und zu synchronisieren, die vom Satelliten (25) in den Strom von Symbolen eingesetzt wird, wobei der Korrelator (192, 200) so aufgebaut ist, dass er ein Masterframe-Korrelationsmuster speichern kann, das der Masterframe-Präambel entspricht, und so programmierbar ist, dass er entweder in einem Suchbetrieb, in einem Prognosebetrieb oder in einem synchronisierten Betrieb arbeitet;
wobei der Demultiplexer (194) mit dem Korrelator (192, 200) verbunden ist, um einen Zeitschlitz-Steuerkanal in dem Strom von Symbolen zu lokalisieren, wobei der Zeitschlitz-Steuerkanal vom Satelliten (25) in den Strom von Symbolen eingesetzt wird, um zu erkennen, welcher der Schlitze die Basiskanäle enthält, die jedem Anbieter aus einer Vielzahl von Sendeprogrammanbietern entspricht; und
eine Eingangsstufe (29), die so aufgebaut ist, dass eine Bedienungsperson einen der Sendeprogrammanbieter auswählen kann, und die in Betrieb gesetzt werden kann, um ein Ausgangssignal für den Demultiplexer (194) zu liefern, wobei der Demultiplexer (194) in Betrieb gesetzt werden kann, um unter Verwendung des Zeitschlitz-Steuerkanals und des Ausgangssignals ausgewählte Basiskanäle heraus zu ziehen;
wobei der Korrelator (192, 200) so aufgebaut ist, dass er im Prognosebetrieb arbeitet, der ein Zeittor und eine Öffnungsbegrenzung verwendet, die einem vorgegebenen Zeitintervall für das nächste Korrelationsereignis an einem Ausgang des Korrelators (192, 200) entsprechen, wenn der Korrelator (192, 200) das Masterframe-Korrelationsmuster abtastet, und im Suchbetrieb arbeitet, ohne weder das Zeittor noch die Öffnungsbegrenzung zu verwenden, wenn das Masterframe-Korrelationsmuster nicht abgetastet wird.

5. Empfängereinheit (29) gemäß Anspruch 4, wobei der Korrelator (192, 200) so aufgebaut ist, dass er im synchronisierten Betrieb arbeitet, wenn das Masterframe-Korrelationsmuster für eine vorgegebene Minimalanzahl von aufeinander folgenden Zeitframes des Datenstroms auf der Abwärtsstrecke abgetastet wird, und im Prognosebetrieb arbeitet, wenn das Masterframe-Korrelationsmuster nicht abgetastet wird, während er im synchronisierten Betrieb arbeitet, wobei der Korrelator (192, 200) den Betrieb im synchronisierten Betrieb beibehält, wobei er ein prognostiziertes Zeitintervall verwendet, um ein anderes Masterframe-Korrelationsmuster festzustellen.

6. Empfängereinheit (29) gemäß Anspruch 5, wobei der Korrelator (192, 200) so aufgebaut ist, dass er in den Betrieb im Suchbetrieb zurück kehrt, wenn während des Prognosebetriebs das Masterframe-Korrelationsmuster für eine vorgegebene Minimalanzahl von aufeinander folgenden Zeitframes des Datenstroms auf der Abwärtsstrecke nicht abgetastet wird.

7. Empfängereinheit (29) gemäß Anspruch 1,
wobei der Demodulator (190) ein Phasenmodulations-Demodulator ist, um den Datenstrom auf der Abwärtsstrecke in einen Strom von Symbolen zu demodulieren, wobei der Datenstrom auf der Abwärtsstrecke vom Satelliten (25) in einem entsprechenden Zeitschlitz mit einer vorgegebenen Anzahl von Basiskanälen versehen wird;
und weiters einen Korrelator (192, 200) enthält, der mit dem Demodulator verbunden ist, um eine Masterframe-Präambel, die vom Satelliten in den Strom von Symbolen eingesetzt wird, zu lokalisieren und zu synchronisieren, wobei der Demultiplexer (194) mit dem Korrelator verbunden ist, um den Zeitschlitz-Steuerkanal im Strom von Symbolen zu lokalisieren, wobei der Zeitschlitz-Steuerkanal vom Satelliten (25) in den Strom von Symbolen eingesetzt wird, um zu erkennen, welcher Zeitschlitz-Ort eine Vielzahl von Symbolen von zumindest einem der Basiskanäle enthält, der jedem Anbieter aus einer Vielzahl von Sendeprogrammanbietern entspricht; und
eine Eingangsstufe (29), die so aufgebaut ist, dass eine Bedienungsperson einen der Sendeprogrammanbieter auswählen kann, und die in Betrieb gesetzt werden kann, um ein Ausgangssignal für den Demultiplexer zu liefern, wobei der Demultiplexer in Betrieb gesetzt werden kann, um einen ausgewählten Basiskanal unter Verwendung des Zeitschlitz-Steuerkanals und des Ausgangssignals heraus zu ziehen.

8. Empfängereinheit (29) gemäß Anspruch 1, wobei die Einheit weiters einen Rundfunkempfänger (29) enthält, um einen Kanal aus der Vielzahl von Basiskanälen zu empfangen, die von einem Satelliten (25) über Signale auf der Abwärtsstrecke übertragen werden, wobei der Rundfunkempfänger (29) enthält:
eine Hochfrequenzstufe (176), um die Signale auf der Abwärtsstrecke zu empfangen;
eine Kanalwiedergewinnungs-Stufe (187), um die Basiskanäle von den Signalen auf der Abwärtsstrecke **dadurch** wieder zu gewinnen, dass die Signale auf der Abwärtsstrecke in einen zeitmultiplexen Basisband-Bitstrom demoduliert werden, der Frames enthält, die vom Satelliten (25) erzeugt werden, wobei jeder der Frames eine Vielzahl von Zeitschlitzen enthält, wobei jeder Zeitschlitz eine Folge von Symbolen enthält, wobei jedes Symbol in der Folge von Symbolen einem entsprechenden Basiskanal entspricht, der eine gleiche Symbolstelle in jedem Zeitschlitz einnimmt, wobei die Frames im Bitstrom unter Verwendung einer Masterframe-Präambel lokalisiert werden, die vom Satelliten (25) in den Bitstrom eingesetzt wird, wobei von jeder Folge von Symbolen in jedem Zeitschlitz von zumindest einem der Frames die Symbole wiedergewonnen werden, die dem zumindest einen der Basiskanäle entsprechen, wobei die Symbole, die dem zumindest einen Basiskanal entsprechen, wieder gemultiplext werden, um einen Sendekanal so wieder zu gewinnen, wie er entspricht und wie er ursprünglich zum Satelliten (25) übertragen wurde, und um einen Dienststeuernachrichtenkopf aus dem genannten Sendekanal auszuziehen; und
eine Steuerstufe (220), wobei die Steuerstufe in Betrieb gesetzt werden kann, um den Betriebsteuerungs-Nachrichtenkopf von der Kanalwiedergewinnungs-Stufe (187) zu empfangen und den Rundfunkempfänger (29) zu steuern, um eine Vielzahl von Funktionen auszuführen, die das Arbeiten des Rundfunkempfängers (29) in einem ausgewählten Empfangsbetrieb umfassen, um einen ausgewählten Multimediadienst zu empfangen, um Daten anzuzeigen, um ein Bild darzustellen, um Daten unter Verwendung eines Decodierschlüssels zu decodieren, der im Betriebssteuerungs-Nachrichtenkopf vorgesehen ist, und um auf einen Identifikations-Code zu antworten, der im Betriebssteuerungs-Nachrichtenkopf vorgesehen ist, um den Rundfunkempfänger (29) eindeutig zu adressieren.

9. Empfängereinheit (29) gemäß Anspruch 1, wobei ein System einen Satelliten (25) sowie eine Anzahl von Sendestationen (23) managt, um Programme für die Übertragung zu entfernt liegenden Rundfunkempfänger-Einheiten auf Sendekanälen über den Satelliten (25) zu übertragen, wobei das System enthält:
ein Satelliten-Steuersystem (238), das so aufgebaut ist, dass es Steuersignale, um die Lage und den Orbit des Satelliten (25) zu steuern, sowie Datenverarbeitungs-Steuersignale erzeugt, um an Bord die Verarbeitung der Programme zu steuern, die über die Sendestationen zum Satelliten (25) hinauf geschickt werden, und sie umzuleiten, um Zeitmultiplexe-Träger hinunter zu schicken;
zumindest ein Telemetrie-, Bereichs- und Steuersystem (24), das mit dem Satelliten-Steuersystem (238) verbunden und so aufgebaut ist, um mit dem Satelliten (25) zu kommunizieren, um die Steuersignale und die Datenverarbeitungs-Signale vom Satelliten-Steuersystem (238) für den Satelliten (25) zu liefern; und
ein Auftrags-Steuersystem (240), das mit dem Satelliten-Steuersystem (238) und mit den Sendestationen verbunden ist, wobei das Auftrags-Steuersystem (240) in Betrieb gesetzt werden kann, um ausgewählte Sendekanäle Sendeprogrammanbietern zuweisen zu können, die beabsichtigen, zumindest ein Programm über den Satelliten (25) zu übertragen, um Kanaldaten zu speichern, die sich auf die Zuordnungen der Sendekanäle beziehen, und die Kanaldaten dem Satelliten-Steuersystem (238) zu liefern, und in Übereinstimmung mit der Anzahl der zugewiesenen Sendekanäle den Programmanbietern Rechnungen zu legen,
wobei das Betriebs-Steuersystem (240) den Programmanbietern eine Vielzahl von Optionen bietet, die eine Anzahl von Sendekanälen umfasst, die für eine Übertragung auf der Aufwärtsstrecke reserviert sind, Daten und Tageszeiten umfasst, die für die Verwendung der Sendekanäle bereitstehen, und bei denen eine Anzahl von Zeitmultiplex-Signalen in einer Anzahl von Strahlen, die dem Satelliten (25) zugeordnet sind, für eine Übertragung auf der Abwärtsstrecke verwendet werden können, wobei das Betriebs-Steuersystem (240) in Betrieb gesetzt werden kann, um dem Satelliten-Steuersystem (238) anzuzeigen, welche Zeitmultiplex-Signale in diesen Strahlen verwendet werden können, und wobei das Satelliten-Steuersystem (238) die entsprechenden Datenverarbeitungs-Signale erzeugt, um das Programm zu ausgewählten Strahlen umzuleiten.

10. Einheit gemäß Anspruch 9, wobei sie Sendekanäle Frequenzorten in einem vorgegebenen HF-Spektrum entsprechen, und wobei das Betriebs-Steuersystem (240) programmierbar ist, um nichtbenachbarte Sendekanäle einem Programmanbieter zuzuweisen.

11. Einheit gemäß Anspruch 10, wobei das Betriebs-Steuersystem (240) in Betrieb gesetzt werden kann, um ein Entstückelungs-Verfahren auszuführen, um den Programmanbietern wieder unterschiedliche Sendekanäle zuzuweisen, um die Verwendung des Satellitenspektrums auf der Aufwärtsstrecke zu optimieren.

12. Einheit gemäß Anspruch 9, wobei die Einheit weiters einen Kanalprogramm-Monitor (242) besitzt, der mit dem Betriebs-Steuersystem (240) verbunden ist, wobei das Betriebs-Steuersystem (240) in Betrieb gesetzt werden kann, um die Lieferung der Programme mit ausreichender Signalstärke und ausreichender Bitfehlerrate unter Verwendung des Kanalprogramm-Monitors zu bestätigen, bevor den Programmanbietern eine Abrechnung erstellt wird.

13. Einheit gemäß Anspruch 9, wobei die Einheit weiters ein Sender-Steuerzentrum (244) besitzt, um die Sendestationen zu überwachen und zu steuern, um den Betrieb der Sendestationen innerhalb von vorgegebenen Toleranzen aufrecht zu halten, die sich auf die Frequenzzuordnungen, die Antennenleistungspegel und die Antennenausrichtung beziehen.

14. Einheit gemäß Anspruch 9, wobei die Einheit weiters ein Sender-Steuerzentrum (244) enthält, um die Sendestationen zu überwachen und zu steuern, wobei das Sender-Steuerzentrum in Betrieb gesetzt werden kann, um die Sendestationen anzuweisen, die Verwendung der Sendekanäle zu beenden.

15. Einheit gemäß Anspruch 9, wobei die Einheit weiters ein Sender-Steuerzentrum (244) enthält, um die Sendestationen zu überwachen und zu steuern, wobei das Sender-Steuerzentrum in Betrieb gesetzt werden kann, um einen Befehl zu erzeugen und zu zumindest einer Sendestation zu übertragen, um die Sendestation abzuschalten.

16. Empfängereinheit gemäß Anspruch 1, wobei ein System einen Satelliten (25) sowie eine Anzahl von Sendestationen managt, um Programme für die Übertragung zu entfernt liegenden Rundfunk-Empfängereinheiten (29) über den Satelliten (25) zu übertragen, wobei das System enthält:
ein Satelliten-Steuersystem (236), das so aufgebaut ist, um Steuersignale, um den Betrieb des Satelliten (25) zu steuern, zu erzeugen, wobei der Satellit (25) so aufgebaut ist, dass er eine Aufwärtsstrecke empfängt, die Frequenzmultiplex-Mehrfachverbindungskanäle enthält, und
zumindest zwei Zeitmultiplex-Signale auf der Abwärtsstrecke erzeugt, wobei jedes der Signale eine Vielzahl von Zeitschlitzen enthält, wobei die Sendestationen in Betrieb gesetzt werden können, um die Programme in Basis-Einheitsschritte zu modulieren, um sie auf ausgewählten Frequenzmultiplex-Mehrfachverbindungskanälen zu übertragen, wobei der Satellit (25) weiters so aufgebaut ist, dass er die Basis-Einheitsschritte zu ausgewählten Zeitschlitzen in Übereinstimmung mit den Steuersignalen umleitet;
ein Betriebs-Steuersystem (240), das mit dem Satelliten-Steuersystem (236) und mit den Sendestationen verbunden ist, wobei das Betriebs-Steuersystem (240) in Betrieb gesetzt werden kann, um ausgewählte Frequenzmultiplex-Mehrfachverbindungskanäle jenen Programmanbietern zuzuweisen, die diese Basis-Einheitsschritte über den Satelliten (25) übertragen möchten, um zumindest eines der Zeitmultiplex-Signale für eine Übertragung der Basis-Einheitsschritte über die Abwärtsstrecke zuzuweisen, um Kanaldaten zu speichern, die sich auf die Zuweisung der Frequenzmultiplex-Mehrfachverbindungskanäle sowie die Zeitmultiplex-Signale beziehen, und die Kanaldaten dem Satelliten-Steuersystem (236) zu liefern, um die Steuersignale zu erzeugen; und
zumindest ein Telemetrie-, Bereichs- und Steuersystem (24), das mit dem Satelliten-Steuersystem (236) verbunden und so aufgebaut ist, um mit dem Satelliten (25) zu kommunizieren, um die Steuersignale vom Satelliten-Steuersystem (236) zum Satelliten (25) zu liefern.

17. Einheit gemäß Anspruch 16, wobei das Betriebs-Steuersystem (240) programmierbar ist, um nichtbenachbarte Frequenzmultiplex-Mehrfachverbindungskanäle einem der Programmanbieter zuzuweisen.

18. Einheit gemäß Anspruch 16, wobei das System (240) in Betrieb gesetzt werden kann, um eine erfolgreiche Übertragung der Basis-Einheitsschritte über zumindest eines der Zeitmultiplex-Signale zu bestätigen, bevor entsprechende Rechnungen für die entsprechenden Programmanbieter gelegt werden.

19. Einheit gemäß Anspruch 16, wobei das Betriebs-Steuersystem (240) in Betrieb gesetzt werden kann, um **dadurch** eine dynamische Steuerung durchzuführen, dass ausgewählte Frequenzmultiplex-Mehrfachverbindungskanäle für eine periodische und vorübergehende Verwendung durch den zumindest einen aus den Anbietern ausgewählten Programmanbieter aufgrund einer monatlichen oder wöchentlichen oder täglichen Basis zugewiesen werden.

20. Einheit gemäß Anspruch 16, wobei das Betriebs-Steuersystem (240) in Betrieb gesetzt werden kann, um eine statische Steuerung **dadurch** auszuführen, dass ausgewählte Frequenzmultiplex-Mehrfachverbindungskanäle ausgewählten Programmanbietern für eine im Wesentlichen konstante und alleinige Nutzung zugewiesen werden.

21. Einheit gemäß Anspruch 16, wobei die Einheit weiters ein Sender-Steuersystem (244) enthält, das mit den Sendestationen verbunden ist und in Betrieb gesetzt werden kann, um die Sendestationen zu überwachen, um festzustellen, ob die Sendestationen innerhalb der vorgegebenen Toleranzen arbeiten, die sich zumindest auf die Frequenz oder die Leistung oder auf die Richtung einer Antenne beziehen, die mit der entsprechenden Sendestation verbunden ist.

22. Einheit gemäß Anspruch 16, wobei die Einheit weiters ein Sender-Steuersystem (244) enthält, das mit den Sendestationen verbunden ist und in Betrieb gesetzt werden kann, um die Sendestationen zu überwachen, um festzustellen, ob die Sendestationen innerhalb der vorgegebenen Toleranzen arbeiten, und um einen Befehl zu erzeugen und zu zumindest einer Sendestation zu übertragen, um dieses Sendestation abzuschalten.

23. Empfängereinheit gemäß Anspruch 4, wobei ein Satellit (25) eine Vorrichtung enthält, um Symbole in parallelen Sendekanälen, die als entsprechende Frequenzmultiplex-Mehrfachverbindungsträger übertragen werden, zu Zeitmultiplex-Datenströmen umzuschalten, wobei die Vorrichtung enthält:
einen ersten und einen zweiten Pingpong-Pufferspeicher (156a, 156b), wobei der erste Pingpong-Pufferspeicher (156a) so aufgebaut ist, dass er eine erste Vielzahl der Symbole in den parallelen Sendekanälen speichert, wobei der zweite Pingpong-Pufferspeicher (156b) in Betrieb gesetzt werden kann, um eine zweite Vielzahl der Symbole in den parallelen Sendekanälen zu speichern, wobei die zweite Vielzahl der Symbole in den parallelen Sendekanälen am Pingpong-Pufferspeicher (156b) eingetroffen ist, bevor die erste Vielzahl der Symbole in den parallelen Sendekanälen am ersten Pingpong-Pufferspeicher (156a) eintrifft;
einen Router-Schalter (172), der mit den Ausgängen des ersten und des zweiten Pingpong-Pufferspeichers (156a, 156b) verbunden ist; und
eine erste Frame-Assemblestufe (160) die mit dem Router-Schalter (172) verbunden ist, wobei der Router-Schalter (172) in Betrieb gesetzt werden kann, um das Einschreiben des Inhalts des zweiten Pingpong-Pufferspeichers (156b) in die erste Frame-Assemblestufe (160) zu steuern.

24. Einheit gemäß Anspruch 23, wobei die Einheit weiters eine zweite Frame-Assemblestufe (162) enthält, die mit dem Router-Schalter (172) verbunden ist, wobei der Router-Schalter (172) in Betrieb gesetzt werden kann, um das Einschreiben des Inhalts des zweiten Pingpong-Pufferspeichers (156b) in zumindest die ersten Frame-Assemblestufe (160) oder die zweite Frame-Assemblestufe (162) zu steuern.

25. Einheit gemäß Anspruch 24, wobei der Router-Schalter (172) in Betrieb gesetzt werden kann, um das Einschreiben des Inhalts des zweiten Pingpong-Pufferspeichers (156b) sowohl in die erste Frame-Assemblestufe (160) als auch in die zweite Frame-Assemblestufe (162) zu steuern, um zwei parallele Zeitmultiplex-Datenströme zu erzeugen.

26. Einheit gemäß Anspruch 23, wobei der zweite Pingpong-Pufferspeicher (156b) in Betrieb gesetzt werden kann, um eine dritte Vielzahl von Sendekanälen zu speichern, wobei der Router-Schalter (172) in Betrieb gesetzt werden kann, um das Einschreiben des Inhalts des ersten Pingpong-Pufferspeichers (156a) in die erste Frame-Assemblestufe (162) zu steuern.

27. Einheit gemäß Anspruch 23, wobei der erste Pingpong-Pufferspeicher (156a) in Betrieb gesetzt werden kann, um gleichzeitig nur ein einziges Symbol der ersten Vielzahl von Symbolen zu schalten.

28. Einheit gemäß Anspruch 23, wobei der zweite Pingpong-Pufferspeicher (156b) in Betrieb gesetzt werden kann, um gleichzeitig nur ein einziges Symbol der zweiten Vielzahl von Symbolen zu schalten.

29. Einheit gemäß Anspruch 23, wobei die erste Frame-Assemblestufe (160) in Betrieb gesetzt werden kann, um zumindest ein Framing-Bit in den zweiten Pingpong-Pufferspeicher (156b) einzusetzen, um die im zweiten Pingpong-Pufferspeicher (156b) gespeicherten Symbole als Frame zu kennzeichnen.

30. Einheit gemäß Anspruch 29, wobei der Frame Zeitschlitze enthält und die erste Frame-Assemblestufe (160) in Betrieb gesetzt werden kann, um zumindest ein Bit, das einen Zeitschlitz-Steuerkanal (170) kennzeichnet, in den zweiten Pingpong-Pufferspeicher (156b) einzusetzen, um anzuzeigen, in welchem der Zeitschlitze die Symbole gespeichert sind, die einen der entsprechenden parallelen Sendekanäle kennzeichnen.

31. Einheit gemäß Anspruch 23, wobei sich die Vorrichtung an Bord eines Satelliten (25) befindet und der Router-Schalter (172) über Steuersignale gesteuert werden kann, die von einer Bodenstation erzeugt und zum Satelliten (25) übertragen werden.

32. Einheit gemäß Anspruch 24, wobei die zweite Frame-Assemblestufe (162) zumindest ein Framing-Bit speichert, um die darin gespeicherten Symbole als Frame zu kennzeichnen.

33. Einheit gemäß Anspruch 32, wobei der Frame Zeitschlitze enthält, und wobei die zweite Frame-Assemblestufe (162) zumindest ein Bit speichert, das einen Zeitschlitz-Steuerkanal (170) darstellt, um anzuzeigen, in welchem der Zeitschlitze die Symbole gespeichert sind, die den entsprechenden Symbolen in den parallelen Sendekanälen entsprechen.

34. Empfängereinheit gemäß Anspruch 1, wobei ein Satelliten-Nutzlastverarbeitungssystem ein Signal auf der Aufwärtsstrecke, das aus einer Vielzahl von Frequenzmultiplex-Mehrfachverbindungskanälen mit einem Kanal pro Träger besteht, zu digitalen Basisband-Bits für eine Übertragung zur Empfängereinheit (29) verarbeitet, wobei das System enthält:
einen mehrphasigen Demultiplexer-Prozessor (144), um das Signal auf der Aufwärtsstrecke in einen Zeitmultiplex-Datenstrom von Symbolen zu teilen und die Symbole, die jedem Träger aus der Vielzahl von Trägern entsprechen, in entsprechende Frequenzen im Signal auf der Aufwärtsstrecke sequentiell an einem Ausgang des mehrphasigen Demultiplexer-Prozessor (144) anzubieten;
einen Phasenmodulations-Demodulator (146), der mit dem Ausgang des mehrphasigen Demultiplexer-Prozessors (144) verbunden ist, um den Strom von Symbolen in einen entsprechenden Zeitmultiplex-Strom von digitalen Basisband-Bits zu demodulieren; und
eine Rate-Ausrichtstufe (150), um den Zeitmultiplex-Strom von digitalen Basisband-Bits zu verarbeiten, um Rate-Differenzen zwischen einem Takt an Bord (152) und den Symbolen zu kompensieren, die jedem Träger aus der Vielzahl von Trägern entsprechen, die am Satelliten (25) empfangen werden, und den Zeitmultiplex-Strom in parallele, mit der Rate ausgerichtete Kanäle zu demultiplexen.

35. Einheit gemäß Anspruch 34, wobei die Einheit weiters einen Differentialdecoder (146) enthält, der mit dem Phasenmodulations-Demodulator (146) verbunden ist, um den Strom von Symbolen wieder zu gewinnen, wenn der Strom von Symbolen für das Trägersignal für die Aufwärtsstrecke unterschiedlich codiert ist.

36. Einheit gemäß Anspruch 34, wobei der Phasenmodulations-Demodulator (146) ein Vierphasenmodulations-Demodulator ist, um jedes der Symbole in zwei entsprechende Bits zu demodulieren.

37. Einheit gemäß Anspruch 34, wobei die Einheit weiters einen Umschalt- und Umleit-Prozessor (172) enthält, um die Kanäle in zumindest einen Träger aus einer Vielfalt von Zeitmultiplex-Trägern auf der Abwärtsstrecke umzuleiten.

38. Empfängereinheit gemäß Anspruch 1, wobei eine Rate-Ausrichtvorrichtung für einen Satelliten (25) digitale Basisband-Bits für eine Übertragung zur Empfängereinheit (29) verarbeitet, wobei die Rate-Ausrichtvorrichtung enthält:
einen Takt an Bord (152);
einen Eingangsschalter (161);
einen Ausgangsschalter (163);
ein Paar von Pingpong-Pufferspeichern (153), das einen ersten und einen zweiten Pufferspeicher (149, 151) enthält und mit dem Eingangsschalter (161) sowie mit dem Ausgangsschalter (163) verbunden ist, wobei der erste und der zweite Pufferspeicher (149, 151) einen Strom von digitalen Basisband-Symbolen empfängt, die von einem Signal auf der Aufwärtsstrecke in Abhängigkeit von der Betätigung des Eingangsschalters (161) und des Ausgangsschalters (163) wiedergewonnen werden, wobei der erste Pufferspeicher (149) des Paars von Pufferspeichern (153) die Bits in Übereinstimmung mit einer Taktfrequenz auf der Aufwärtsstrecke empfängt, die man vom Signal auf der Aufwärtsstrecke erhält, wobei der zweite Pufferspeicher (151) des Paars von Pufferspeichern (153) im Wesentlichen gleichzeitig seinen gespeicherten Inhalt in Übereinstimmung mit dem Takt an Bord (152) entleert, wobei die Vorgänge des ersten und des zweiten Pufferspeichers (149, 151) mit der Betätigung des Eingangsschalters (161) und des Ausgangsschalters (163) umgekehrt werden;
einen ersten und einen zweiten Korrelator (155), die mit dem ersten bzw. mit dem zweiten Pufferspeicher (149, 151) verbunden sind und in Betrieb gesetzt werden können, um eine Spitze zu erzeugen, wenn ein Nachrichtenkopf angibt, dass ein Frame im Strom von Basisband-Symbolen abgetastet wurde, wobei das Paar von Pufferspeichern (153) in Betrieb gesetzt werden kann, um mit dem Einschreiben des Stroms von Basisband-Symbolen in das Paar von Pufferspeichern (149, 151) fortzufahren, bis die Spitze auftritt, wobei der Eingangsschalter (161) und der Ausgangsschalter (163) umgeschaltet werden, um die Zustände umzukehren, wobei der erste und der zweite Pufferspeicher (149, 151) das Signal auf der Aufwärtsstrecke empfangen, das zum Ausgang in Übereinstimmung mit der Taktfrequenz an Bord ausgelesen wird;
einen synchronisierten Impulsoszillator (157), der mit dem ersten und mit dem zweiten Korrelator (155) verbunden ist und in Betrieb gesetzt werden kann, um für jedes der Symbole einen geglätteten Impuls zu erzeugen, das zum Ausgang ausgelesen wird; und
einen Zähler (159), der mit dem Oszillator (157) verbunden ist, um die geglätteten Impulse abzuzählen, wobei bei den Nachrichtenköpfen der Ströme in Übereinstimmung mit dem Wert des Zählers (159) eine Anzahl von Bits hinzugefügt und entfernt wird.

39. Einheit gemäß Anspruch 38, wobei die Einheit weiters einen Empfangs-Symboltakt enthält, der mit dem ersten Pufferspeicher und dem zweiten Pufferspeicher (149, 151) verbunden ist und in Betrieb gesetzt werden kann, um vom ersten Pufferspeicher und vom zweiten Pufferspeicher (149, 151) jenen Pufferspeicher in Betrieb zu setzen, der gerade mit dem Eingangsschalter (161) verbunden ist, um die Symbole zu empfangen, die vom Signal auf der Aufwärtsstrecke wiedergewonnen werden.

40. Einheit gemäß Anspruch 38, wobei die Einheit weiters einen Symbol-Takt an Bord (152) enthält, der mit dem ersten Pufferspeicher und dem zweiten Pufferspeicher (149, 151) verbunden ist und in Betrieb gesetzt werden kann, um vom ersten Pufferspeicher (149) und vom zweiten Pufferspeicher (151) jenen Pufferspeicher, der gerade mit dem Ausgangsschalter (163) verbunden ist, in Betrieb zu setzen, um die Symbole auszugeben, die darin gespeichert sind.

41. Verfahren zur Wiedergewinnung von zumindest einem Basiskanal unter mehreren Basiskanälen, die in einem Zeitmultiplex-Datenstrom auf der Abwärtsstrecke von einem Satelliten (25) übertragen werden, wobei das Verfahren folgende Schritte enthält:
Demodulieren (190) des Datenstroms auf der Abwärtsstrecke in einen Strom von Symbolen, wobei der Datenstrom auf der Abwärtsstrecke Zeitschlitze enthält, die eine Vielzahl von Zeitschlitz-Orten besitzen und vom Satelliten (25) mit einer vorgegebenen Anzahl von Basiskanälen versehen werden, wobei jeder der Basiskanäle eine Vielzahl von Symbolen enthält, wobei jede Vielzahl von Symbolen jeweils den Zeitschlitzen zugewiesen ist, um die Vielzahl von Symbolen, die jedem der Basiskanäle entsprechen, über den Datenstrom auf der Abwärtsstrecke zu verteilen, wobei die Vielzahl von Symbolen für jeden der Basiskanäle einem entsprechenden Ort aus der Vielzahl von Zeitschlitz-Orten in jedem der Zeitschlitze zugewiesen ist;
Demultiplexen (194) des Stroms von Symbolen, um einen Zeitschlitz-Steuerkanal zu lokalisieren, der vom Satelliten (25) darin eingesetzt wird, um zu erkennen, welcher Ort aus der Vielzahl von Zeitschlitz-Orten die Vielzahl von Symbolen von zumindest einem der Basiskanäle enthält, der einem ausgewählten Sendeprogrammanbieter entspricht;
Herausziehen (220, 205) der Vielzahl von Symbolen, die dem zumindest einen Basiskanal des ausgewählten Senderprogramm-Anbieters entsprechen, aus dem Strom von Symbolen in Übereinstimmung mit dem Zeitschlitz-Steuerkanal; und
Multiplexen (196) der Vielzahl von Symbolen, die dem ausgewählten Senderprogrammanbieter entsprechen, in einen seriellen Sendekanal-Datenstrom.

42. Verfahren gemäß Anspruch 41, wobei der Sendeprogrammanbieter eine Vielzahl von Basiskanälen verwendet, wobei das Verfahren weiters einen Schritt enthält, in dem die Vielzahl von Basiskanälen im Hinblick zueinander ausgerichtet (196) wird, bevor die Vielzahl von Symbolen gemultiplext wird, die der Vielzahl von Basiskanälen entsprechen.

43. Verfahren gemäß Anspruch 42, wobei jeder der Basiskanäle einen Nachrichtenkopf enthält, und wobei der Ausrichtschritt folgende Schritte enthält:
Einschreiben der Vielzahl von Basiskanälen in entsprechende Pufferspeicher (222), nachdem die entsprechenden Zeitpunkte des Eintreffens der Nachrichtenköpfe bestimmt wurden (224); und
Auslesen aus den Pufferspeichern (222), nachdem der letzte Zeitpunkt des Eintreffens bestimmt wurde.

44. Verfahren gemäß Anspruch 41, wobei das Verfahren weiters folgende Schritte enthält:
Demodulieren (190) des Datenstroms auf der Abwärtsstrecke in einen zeitmultiplexen (TDM) Basisband-Datenstrom, der Frames enthält, die vom Satelliten (25) erzeugt werden, wobei jeder der Frames eine Vielzahl von Zeitschlitzen enthält, wobei jeder der Zeitschlitze eine Folge der Symbole enthält, wobei jedes Symbol in der Folge von Symbolen einem entsprechenden Basiskanal entspricht, der eine gleiche Stelle in jedem der Zeitschlitze besetzt;
Lokalisieren (192) der Frames im Basisband-TDM-Bitstrom unter Verwendung einer Masterframe-Präambel, die vom Satelliten (25) in den Basisband-TDM-Bitstrom eingesetzt wird;
Wiedergewinnen (194) von jeder Folge von Symbolen in jedem der Zeitschlitze von zumindest einem der Frames der Symbole, der zumindest einem der Basiskanäle entspricht;
Wiedermultiplexen (196, 206, 208) der Symbole, die dem zumindest einen Basiskanal entsprechen, um einen Sendekanal wieder herzustellen, wie er entspricht und wie er ursprünglich zum Satelliten (25) übertragen wurde; und
Herausziehen (220, 205) eines Betriebssteuerungs-Nachrichtenkopfs aus dem Sendekanal.

45. Verfahren gemäß Anspruch 44, wobei der Schritt zum Wiedergewinnen folgende Schritte enthält:
Lokalisieren (194) eines Zeitschlitz-Steuerkanals, der vom Satelliten (25) in den Bit-Strom eingesetzt wird, wobei der Steuerkanal anzeigt, welcher der Zeitschlitze jene Symbole enthält, die jedem der Basiskanäle entsprechen; und
Herausziehen (220, 205) jener Symbole, die einem der Basiskanäle entsprechen, der unter Verwendung des Steuerkanals ausgewählt wurde.

46. Verfahren gemäß Anspruch 44, wobei das Verfahren einen Schritt (220, 212) besitzt, in dem bestimmt wird, ob der Betriebsteuerungs-Nachrichtenkopf einen Identifizierungs-Code enthält, der von einer Sendestation in den Sendekanal vor der Übertragung zum Satelliten (25) eingesetzt wurde, um einen Rundfunkempfänger (29) eindeutig zu adressieren.

47. Verfahren gemäß Anspruch 44, wobei das Verfahren weiters folgende Schritte enthält:
Bestimmen (220, 212), ob der Betriebsteuerungs-Nachrichtenkopf Steuerdaten enthält; und
Betätigen eines Rundfunkempfängers (29), um zumindest eine Funktion aus einer Vielzahl von Funktionen in Abhängigkeit von den Steuerdaten auszuführen, wobei die Vielzahl von Funktionen das Betätigen des Rundfunkempfängers in einem ausgewählten Empfangsbetrieb umfasst, um einen ausgewählten Multimediadienst zu liefern, um Daten anzuzeigen, um ein Bild darzustellen, und um Daten unter Verwendung eines Decodierschlüssels zu entschlüsseln, der im Betriebssteuerungs-Nachrichtenkopf vorgesehen ist.

48. Verfahren gemäß Anspruch 41, wobei ein Senderprogramm von einem Sendeprogrammanbieter zu einer oder mehreren entfernt liegenden Empfängereinheiten (29) übertragen wird, wobei das Verfahren weiters folgende Schritte enthält:
Zusammensetzen von Bits (26), die zumindest einem Teil des Programms entsprechen, zu einer ersten Anzahl von Basis-Einheitsschritten, die gleichförmige und vorgegebene Raten besitzen;
Erzeugen (28, 94) eines Frames (100), der eine vorgegebene Dauer besitzt und jeden der Basis-Einheitsschritte sowie einen Frame-Nachrichtenkopf (102) enthält;
Teilen des Frames (100) in Symbole (114), wobei jedes der Symbole eine vorgegebene und aufeinander folgende Anzahl der Bits enthält;
Demultiplexen (32, 82) der Symbole (114) des Frames (100) in eine zweite Anzahl von parallelen Basiskanälen, wobei jeder der Basiskanäle die gleiche vorgegebene Dauer wie der Frame (100) besitzt, wobei die Symbole (114) in einer vorgegebenen Reihenfolge über den Basiskanal vorgesehen sind, um aufeinander folgende Symbole (114) zu trennen, wobei jeder der Basiskanäle einen Basiskanal-Synchronisiernachrichtenkopf enthält, um die Basiskanäle bei den Empfängereinheiten (29) wieder herzustellen; und
Modulieren (86) der Basiskanäle auf eine entsprechende Anzahl von Trägerfrequenzen auf der Aufwärtsstrecke für eine Sendeübertragung.

49. Verfahren gemäß Anspruch 48, wobei der Frame-Nachrichtenkopf (102) Bits enthält, um die Empfängereinheit (29) zu steuern.

50. Verfahren gemäß Anspruch 48, wobei das Programm durch zwei Dienste **gekennzeichnet** ist, und wobei das Verfahren weiters einen Schritt (26) enthält, um zumindest einen der Basis-Einheitsschritte in zwei Teile zu teilen, um die Bits zu tragen, die jeweils den beiden Diensten entsprechen.

51. Verfahren gemäß Anspruch 48, wobei die zweite Anzahl von Basiskanälen der ersten Anzahl von Basis-Einheitsschritten entspricht.

52. Verfahren gemäß Anspruch 48, wobei der Modulationsschritt (26) einen Schritt enthält, in dem jeder der Basiskanäle unter Verwendung von einer Vielzahl von Vierphasenmodulations-Modulatoren moduliert wird.

53. Verfahren gemäß Anspruch 52, wobei jedes der Symbole (114) zwei dieser Bits enthält.

54. Verfahren gemäß Anspruch 52, wobei die zweite Anzahl von Basiskanälen und die Vielzahl von Vierphasenmodulations-Modulatoren (86) in ihrer Anzahl der ersten Anzahl von Basis-Einheitsschritten entspricht.

55. Verfahren gemäß Anspruch 48, wobei die vorgegebene Reihenfolge eine ansteigende Reihenfolge ist.

56. Verfahren gemäß Anspruch 42, wobei ein Sendeprogramm von einem Sendeprogrammanbieter zu einer oder mehreren Empfängereinheiten (29) übertragen wird, wobei das Verfahren weiters folgende Schritte enthält:
Zusammensetzen (26) des Programms zu einer ersten ganzzahligen Anzahl von Basis-Einheitsschritten, die eine gleichförmige und vorgegebene Rate besitzen;
Erzeugen (28) eines Frames (100) von Bits, der eine vorgegebene Dauer besitzt und jeden der Basis-Einheitsschritte sowie einen Frame-Nachrichtenkopf (102) besitzt;
Codieren (30, 80) des Frames, um einen codierten Frame zu erzeugen, der Bits enthält, die für einen Schutz mit einer Vorwärtsfehlerkorrektur codiert sind;
Teilen des codierten Frames in Symbole (114), wobei jedes der Symbole (114) eine vorgegebene und aufeinander folgende Anzahl der Bits enthält;
Demultiplexen (82) der Symbole in eine zweite Anzahl von parallelen Basiskanälen, wobei die Symbole (114) in einer vorgegebenen Reihenfolge über die Basiskanäle vorgesehen sind, um aufeinander folgende Symbole zu trennen (114), wobei die Basiskanäle einen Basiskanal-Synchronisiernachrichtenkopf enthalten, um die Basiskanäle an den entfernt liegenden Empfängereinheiten (29) wieder zu gewinnen; und
Modulieren (86) der Basiskanäle auf eine entsprechende Anzahl von Trägerfrequenzen auf der Aufwärtsstrecke für eine Sendeübertragung.

57. Verfahren gemäß Anspruch 56, wobei der Codierschritt (30, 80) zumindest ein Codierschema enthält, das aus einer Gruppe ausgewählt wird, die eine Reed-Solomon-Codierung, eine Verschachtelungs-Codierung sowie eine Trellis-Faltungscodierung umfasst.

58. Verfahren gemäß Anspruch 56, wobei der Codierschritt (30, 80) folgende Schritte enthält:
Codieren des Frames (100) in Übereinstimmung mit einem ersten Codierschema, um einen ersten codierten Frame zu erzeugen;
Verschachteln des ersten codierten Frames, um einen verschachtelten codierten Frame zu erzeugen; und
Codieren des verschachtelten codierten Frames unter Verwendung eines zweiten Codierschemas.

59. Verfahren gemäß Anspruch 58, wobei das erste Codierschema ein Reed-Solomon-Codierschema ist.

60. Verfahren gemäß Anspruch 58, wobei das zweite Codierschema ein Trellis-Faltungscodierschema ist.

61. Verfahren gemäß Anspruch 56, wobei die vorgegebene Reihenfolge eine aufsteigende Reihenfolge ist.

62. Verfahren gemäß Anspruch 41, wobei die Rate der Symbole auf der Aufwärtsstrecke mit einem Takt an Bord (152) des Satelliten (25) für eine digitale Basisbandverarbeitung vor der Übertragung über einen Zeitmultiplex-Strom auf der Abwärtsstrecke ausgerichtet ist, wobei die Ausrichtung folgende Schritte enthält:
Befüllen eines Pufferspeichers (149, 151) mit einer Vielzahl der Symbole mit einer empfangenen Symbolrate;
Korrelieren (155) der Symbole im Pufferspeicher zu Frames **dadurch**, dass ein Nachrichtenkopf, der unter die Symbole eingesetzt ist, mit einem eindeutigen Framing-Wort verglichen wird, um den Nachrichtenkopf in der genannten Vielzahl von Symbole zu lokalisieren, die im Pufferspeicher (149, 151) gespeichert ist, und Korrelationsspitzen zu erzeugen, wenn der Nachrichtenkopf lokalisiert wurde,
Abzählen (159) der Anzahl von Takten, die vom Symboltakt an Bord zwischen den Korrelationsspitzen erzeugt werden; und
Einstellen der Länge (159) des Nachrichtenkopfs (112) im Pufferspeicher, um eine Rate-Differenz zwischen der empfangenen Symbolrate und der Symbolrate an Bord zu kompensieren.

## Revendications

1. Unité de réception (29) destinée à recevoir depuis un satellite (25) un flux de données descendant multiplexé par répartition dans le temps, comprenant :
un démodulateur (190) pour démoduler ledit flux de données descendant en un flux de symboles, ledit flux de données descendant comprenant des intervalles de temps ayant une pluralité d'emplacements d'intervalle de temps et étant doté d'un nombre prédéterminé de canaux à débit préférentiel par ledit satellite (25), lesdits canaux à débit préférentiel comprenant chacun une pluralité de symboles, chacun de ladite pluralité de symboles étant affecté, respectivement, audits intervalles de temps pour étaler ladite pluralité de symboles correspondant à chacun desdits canaux à débit préférentiel sur ledit flux de données descendant, ladite pluralité de symboles pour chacun desdits canaux à débit préférentiel étant affectée audit emplacement correspondant à ladite pluralité d'emplacements d'intervalle de temps dans chacun desdits intervalles de temps;
un démultiplexeur (194) connecté audit démodulateur pour localiser un canal de contrôle d'intervalles de temps inséré dans ledit flux de symboles au moyen dudit satellite (25) pour identifier lequel de ladite pluralité d'emplacements d'intervalle de temps comprend ladite pluralité de symboles d'au moins un desdits canaux à débit préférentiel correspondant à un fournisseur de service de radiodiffusion sélectionné ;
un dispositif d'extraction (220, 205) destiné à extraire ladite pluralité de symboles correspondant audit au moins un canal à débit préférentiel dudit fournisseur de service de radiodiffusion sélectionné dudit flux de symboles selon ledit canal de contrôle d'intervalles de temps ; et
un multiplexeur (196) destiné à multiplexer ladite pluralité de symboles correspondant audit fournisseur de service de radiodiffusion sélectionné en un flux de données de canal de radiodiffusion en série.

2. Unité de réception (29) selon la revendication 1, dans laquelle ledit fournisseur de service de radiodiffusion utilise une pluralité desdits canaux à débit préférentiel, et comprenant en outre un dispositif de réalignement (196) connecté audit dispositif d'extraction (220, 205) et configuré pour aligner ladite pluralité desdits canaux à débit préférentiel les uns par rapport aux autres.

3. Unité de réception (29), selon la revendication 2, dans lequel chacun desdits canaux à débit préférentiel comprend un entête et ledit dispositif de réalignement (196) comprend :
un tampon (222) pour chacun de ladite pluralité desdits canaux à débit préférentiel ; et
un corrélateur (200) connecté audit tampon et configuré pour déterminer l'instant d'arrivée dudit entête d'un canal correspondant desdits canaux à débit préférentiel et
pour commencer à écrire ledit canal à débit préférentiel dans ledit tampon, ledit tampon pour chacun de ladite pluralité de canaux à débit préférentiel étant lu à partir du moment où l'instant d'arrivée dudit entête correspondant au dernier desdits canaux à débit préférentiel est détecté, pour générer ledit flux de données de canal de radiodiffusion en série.

4. Unité de réception (29), selon la revendication 1,
dans laquelle ledit démodulateur (190) est un démodulateur par déplacement de phase pour démoduler ledit flux de données descendant en un flux de symboles, ledit flux de données descendant étant doté d'un nombre prédéterminé de canaux à débit préférentiel dans les intervalles respectifs desdits intervalles par ledit satellite (25) ;
l'unité de réception (29) comprenant en outre :
un corrélateur (192, 200) connecté audit démodulateur (190) pour localisation et synchronisation sur un préambule de trame principal inséré dans ledit flux de symboles par ledit satellite (25), ledit corrélateur (192, 200) étant configuré pour stocker un motif de corrélation de trame principal correspondant audit préambule de trame principal et programmable pour fonctionner dans un mode parmi un mode de recherche, un mode de prédiction et un mode synchronisé ;
ledit démultiplexeur (194) étant connecté audit corrélateur (192, 200) pour localiser un canal de contrôle d'intervalles de temps dans ledit flux de symboles, ledit canal de contrôle d'intervalles de temps étant inséré dans ledit flux de symboles par ledit satellite (25) pour identifier lequel des intervalles comprend lesdits canaux à débit préférentiel correspondant à chacun d'une pluralité de fournisseurs de services de radiodiffusion ; et
un dispositif d'entrée (29) configuré pour permettre à un opérateur de sélectionner un desdits fournisseurs de service de radiodiffusion et utilisable pour fournir un signal de sortie audit démultiplexeur (194), ledit démultiplexeur (194) étant utilisable pour extraire les canaux sélectionnés desdits canaux à débit préférentiel en utilisant ledit canal de contrôle d'intervalles de temps et ledit signal de sortie ;
dans lequel ledit corrélateur (192, 200) est configuré pour fonctionner dans ledit mode prédictif employant l'une parmi une porte de temps et une limitation d'ouverture correspondant à un intervalle de temps prédit pour l'événement de corrélation suivant à une sortie dudit corrélateur (192, 200) lorsque ledit corrélateur (192, 200) détecte ledit motif de corrélation de trame principal, et pour fonctionner dans ledit mode de recherche sans employer l'une ou l'autre de ladite porte de temps et de ladite limitation d'ouverture lorsque ledit motif de corrélation de trame principal n'est pas détecté.

5. Unité de réception (29) selon la revendication 4, dans laquelle ledit corrélateur (192, 200) est configuré pour fonctionner dans ledit mode synchronisé lorsque ledit motif de corrélation de trame principal est détecté pour un nombre minimum prédéterminé de trames de temps consécutives dudit flux de données descendant, et pour fonctionner dans ledit mode prédictif lorsque ledit motif de corrélation de trame principal n'est pas détecté tout en fonctionnant dans ledit mode synchronisé, ledit corrélateur (192, 200) maintenant le fonctionnement dans ledit mode synchronisé en utilisant un créneau de temps prédit pour déterminer un autre dit motif de corrélation de trame principal.

6. Unité de réception (29) selon la revendication 5, dans laquelle ledit corrélateur (192, 200) est configuré pour retourner à un fonctionnement dans ledit mode de recherche lorsque ledit motif de corrélation de trame principal n'est pas détecté pendant un nombre minimum prédéterminé de trames de temps consécutives dudit flux de données descendant pendant ledit mode prédictif.

7. Unité de réception (29) selon la revendication 1 :
dans lequel ledit démodulateur (190) est un démodulateur par déplacement de phase pour démoduler ledit flux de données descendant en un flux de symboles, ledit flux de données descendant étant doté d'un nombre prédéterminé de canaux à débit préférentiel dans les intervalles respectifs desdits intervalles de temps par ledit satellite (25) ;
et comprenant en outre un corrélateur (192, 200) connecté audit démodulateur pour localisation et synchronisation sur un préambule de trame principal inséré dans ledit flux de symboles par ledit satellite, ledit démultiplexeur (194) étant connecté audit corrélateur pour localiser ledit canal de contrôle d'intervalles de temps dans ledit flux de symboles, ledit canal de contrôle d'intervalles de temps étant inséré dans ledit flux de symboles par ledit satellite (25) pour identifier lequel des emplacements d'intervalle de temps comprend ladite pluralité de symboles d'au moins un canal desdits canaux à débit préférentiel correspondant à chacun d'une pluralité de fournisseurs de service de radiodiffusion ; et
un dispositif d'entrée (29) configuré pour permettre à un opérateur de sélectionner un desdits fournisseurs de service de radiodiffusion et utilisable pour fournir un signal de sortie audit démultiplexeur, ledit démultiplexeur étant utilisable pour extraire les canaux sélectionnés desdits canaux à débit préférentiel en utilisant ledit canal de contrôle d'intervalles de temps et ledit signal de sortie.

8. Unité de réception (29) selon la revendication 1, comprenant en outre un récepteur radio (29) pour recevoir un d'une pluralité de canaux à débit préférentiel transmis via des signaux descendants provenant d'un satellite (25), le récepteur radio (29) comprenant :
un dispositif radiofréquence (1.76) pour recevoir lesdits signaux descendants ;
un dispositif de récupération de canaux (187) pour récupérer lesdits canaux à débit préférentiel à partir desdits signaux descendants en démodulant lesdits signaux descendants en un flux binaire multiplexé par répartition dans le temps en bande de base comprenant des trames générées par ledit satellite (25), chacune desdites trames comprenant une pluralité d'intervalles de temps, chacun desdits intervalles de temps comprenant un ensemble de symboles, chaque symbole dans ledit ensemble de symboles correspondant à un canal respectif desdits canaux à débit préférentiel occupant une position de symbole similaire dans chacun desdits intervalles de temps, localiser lesdites trames dans ledit flux binaire en utilisant un préambule de trame principal inséré dans ledit flux binaire par ledit satellite (25), récupérer à partir dudit ensemble de symboles dans chacun desdits intervalles de temps d'au moins une desdites trames, les symboles qui correspondent à au moins un desdits canaux à débit préférentiel, remultiplexer lesdits symboles correspondant audit au moins un canal desdits canaux à débit préférentiel pour récupérer un canal de radiodiffusion correspondant à celui-ci et comme transmis à l'origine audit satellite (25), et extraire un entête de contrôle de service dudit canal de radiodiffusion ; et
un contrôleur (220), ledit contrôleur étant utilisable pour recevoir ledit entête de contrôle de service dudit dispositif de récupération de canal (187) et contrôler ledit récepteur radio (29) pour effectuer une pluralité de fonctions comprenant le fonctionnement dudit récepteur radio (29) dans un mode de réception sélectionné pour fournir un service multimédia sélectionné, pour afficher des données, pour afficher une image, pour décrypter des données en utilisant une clé de déchiffrement fournie dans ledit entête de contrôle de service, et pour répondre à un code d'identification fourni dans ledit entête de contrôle de service pour adresser uniquement ledit récepteur radio (29).

9. Unité de réception (29) selon la revendication 1, dans laquelle un système gère un satellite (25) et un certain nombre de stations de radiodiffusion (23) pour générer des programmes pour transmission à des unités de réception radio distantes sur des canaux de radiodiffusion via le satellite (25), le système comprenant :
un système de contrôle de satellite (238) configuré pour générer des signaux de contrôle pour contrôler l'assiette et l'orbite dudit satellite (25), et des signaux de contrôle de traitement de données pour contrôler le traitement à bord desdits programmes montant vers ledit satellite (25) via lesdites stations de radiodiffusion et assurer le routage vers des porteuses à liaison descendante multiplexées par répartition dans le temps ;
au moins un système de télémétrie, de rangement et de contrôle (24) connecté audit système de contrôle de satellite (238) et configuré pour communiquer avec ledit satellite (25) pour fournir lesdits signaux de contrôle et lesdits signaux de traitement de données dudit système de contrôle de satellite (238) audit satellite (25) ; et
un système de contrôle de mission (240) connecté audit système de contrôle de satellite (238) et auxdites stations de radiodiffusion, ledit système de contrôle de mission (240) étant utilisable pour affecter les canaux sélectionnés desdits canaux de diffusion aux fournisseurs de service souhaitant transmettre au moins un desdits programmes via ledit satellite (25), pour stocker les données de canaux relatives auxdites affectations desdits canaux de diffusion et fournir lesdites données de canaux audit système de contrôle de satellite (238), et facturer lesdits fournisseurs de service selon le nombre desdits canaux de service qui leur sont affectés, ledit système de contrôle de mission (240) fournissant audits fournisseurs de service une pluralité d'options comprenant le nombre desdits canaux de radiodiffusion devant être réservé pour la transmission montante, les dates et heures du jour pour l'utilisation desdits canaux de radiodiffusion, et lesquels d'un certain nombre de signaux multiplexés par répartition dans le temps dans un nombre de flux associés audit satellite (25) doivent être utilisés pour la transmission descendante, ledit système de contrôle de mission (240) étant utilisable pour indiquer audit système de contrôle de satellite (238) les signaux multiplexés par répartition dans le temps dans lesdits flux qui doivent être utilisés et ledit système de contrôle de satellite (238) générant lesdits signaux de traitement de données correspondants pour acheminer ledit programme vers les flux sélectionnés desdits flux.

10. Unité selon la revendication 9, dans laquelle lesdits canaux de radiodiffusion correspondent à des emplacements de fréquences dans un spectre de fréquences radio prédéterminé et ledit système de contrôle de mission (240) est programmable pour affecter des canaux non contigus desdits canaux de radiodiffusion à un desdits fournisseurs de service.

11. Unité selon la revendication 10, dans laquelle ledit système de contrôle de mission (240) est utilisable pour effectuer un processus de défragmentation pour réaffecter lesdits fournisseurs de service aux différents canaux de radiodiffusion pour optimiser l'utilisation du spectre de liaison montante du satellite.

12. Unité selon la revendication 9, comprenant en outre un contrôleur de service de canaux (242) connecté audit système de contrôle de mission (240), ledit système de contrôle de mission (240) étant utilisable pour valider la fourniture desdits programmes avec une intensité de signal suffisante et un taux d'erreur binaire suffisamment faible en utilisant ledit contrôleur de service de canal avant de facturer lesdits fournisseurs de service.

13. Unité selon la revendication 9, comprenant en outre un centre de contrôle de radiodiffusion (244) pour surveiller et contrôler lesdites stations de radiodiffusion pour conserver les performances desdites stations de radiodiffusion à l'intérieur de tolérances prédéterminées concernant les affectations de fréquence porteuse, les niveaux de puissance d'antenne et le pointage de l'antenne.

14. Unité selon la revendication 9, comprenant en outre un centre de contrôle de radiodiffusion (244) pour surveiller et contrôler lesdites stations de radiodiffusion et utilisable pour instruire lesdites stations de radiodiffusion de terminer l'utilisation desdits canaux de radiodiffusion.

15. Unité selon la revendication 9, comprenant en outre un centre de contrôle de radiodiffusion (244) pour surveiller et contrôler lesdites stations de radiodiffusion et utilisable pour générer et transmettre une commande vers au moins une desdites stations de radiodiffusion pour désactiver ladite station de radiodiffusion.

16. Unité de réception selon la revendication 1, dans laquelle un système gère un satellite (25) et un certain nombre de stations de radiodiffusion pour générer des programmes de transmission vers des unités de réception radio distantes (29) via le satellite (25), le système comprenant :
un système de contrôle de satellite (236) configuré pour générer des signaux de contrôle pour contrôler le fonctionnement dudit satellite (25), ledit satellite (25) étant configuré pour recevoir des canaux d'accès multiple par répartition en fréquence et pour générer au moins deux signaux descendants multiplexés par répartition dans le temps, chacun desdits signaux comprenant une pluralité d'intervalles de temps, lesdites stations de radiodiffusion étant utilisables pour moduler lesdits programmes en incréments de débit préférentiel pour la transmission sur des canaux sélectionnés desdits canaux d'accès multiple par répartition en fréquence, ledit satellite (25) étant en outre configuré pour acheminer lesdits incréments de débit préférentiel vers les intervalles de temps sélectionnées desdits intervalles de temps selon lesdits signaux de contrôle ;
un système de contrôle de mission (240) connecté audit système de contrôle de satellite (236) et auxdites stations de radiodiffusion, ledit système de contrôle de mission (240) étant utilisable pour affecter les canaux sélectionnés desdits canaux d'accès multiple par répartition en fréquence aux fournisseurs de service souhaitant transmettre lesdits incréments de débit préférentiel via ledit satellite (25), pour affecter au moins un desdits signaux multiplexés par répartition dans le temps pour une transmission descendante desdits incréments de débit préférentiel, pour stocker des données de canaux relatives auxdites affectations desdits canaux d'accès multiple par répartition en fréquence et desdits signaux multiplexés par répartition dans le temps et pour fournir lesdites données de canaux audit système de contrôle de satellite (236) pour générer lesdits signaux de contrôle ; et
au moins un système de télémétrie, de rangement et de contrôle (24) connecté audit système de contrôle de satellite (236) et configuré pour communiquer avec ledit satellite (25) pour fournir lesdits signaux de contrôle dudit système de contrôle de satellite (236) audit satellite (25).

17. Unité selon la revendication 16, dans laquelle ledit système de contrôle de mission (240) est programmable pour affecter des canaux non contigus desdits canaux d'accès multiple par répartition en fréquence à un desdits fournisseurs de service.

18. Unité selon la revendication 16, dans laquelle ledit système (240) est utilisable pour valider la transmission réussie desdits incréments de débit préférentiel via au moins un de signaux multiplexés par répartition dans le temps avant de générer des factures respectives pour lesdits fournisseurs de service correspondants.

19. Unité selon la revendication 16, dans laquelle ledit système de contrôle de mission (240) est utilisable pour effectuer un contrôle dynamique en affectant les canaux sélectionnés desdits canaux d'accès multiple par répartition en fréquence pour un usage périodique et provisoire par au moins un fournisseur sélectionné desdits fournisseurs de service sur une base mensuelle, hebdomadaire et quotidienne.

20. Unité selon la revendication 16, dans laquelle ledit système de contrôle de mission (240) est utilisable pour effectuer un contrôle statique en affectant des canaux sélectionnés desdits canaux d'accès multiple par répartition en fréquence aux fournisseurs sélectionnés desdits fournisseurs de service pour une utilisation sensiblement constante et exclusive.

21. Unité selon la revendication 16, comprenant en outre un système de contrôle de radiodiffusion (244) connecté auxdites stations de radiodiffusion et utilisable pour surveiller lesdites stations de radiodiffusion pour déterminer si lesdites stations de radiodiffusion fonctionnent dans des tolérances prédéterminées par rapport à au moins une parmi la fréquence, la puissance et la direction d'une antenne connectée à la station respective desdites stations de radiodiffusion.

22. Unité selon la revendication 16, comprenant en outre un système de contrôle de radiodiffusion (244) connecté auxdites stations de radiodiffusion et utilisable pour surveiller lesdites stations de radiodiffusion pour déterminer si lesdites stations de radiodiffusion fonctionnent dans des tolérances prédéterminées, et pour générer et transmettre une commande vers au moins une desdites stations de radiodiffusion pour désactiver ladite station de radiodiffusion.

23. Unité de réception selon la revendication 4, dans laquelle un satellite (25) comprend un appareil pour commuter les symboles dans des canaux de radiodiffusion parallèles transmis comme des porteuses à accès multiple par répartition en fréquence respectives vers des flux de données multiplexés par répartition dans le temps, l'appareil comprenant :
des premier et second tampons de transmission en ping-pong (156a, 156b), ledit premier tampon de transmission en ping-pong (156a) étant configuré pour stocker une première pluralité desdits symboles dans lesdits canaux de radiodiffusion parallèles, ledit second tampon de transmission en ping-pong (156b) étant utilisable pour stocker une seconde pluralité desdits symboles dans lesdits canaux de radiodiffusion parallèles, ladite seconde pluralité desdits symboles dans lesdits canaux de radiodiffusion parallèles étant arrivée au niveau dudit second tampon de transmission en ping-pong (156b) avant l'arrivée de ladite première pluralité desdits symboles dans lesdits canaux de radiodiffusion parallèles au niveau dudit premier tampon de transmission en ping-pong (156a) ;
un commutateur de routage (172) connecté aux sorties desdits premier et second tampons de transmission dans le temps (156a, 156b) ; et
un premier assembleur de trames (160) connecté audit commutateur de routage (172), ledit commutateur de routage (172) étant utilisable pour contrôler l'écriture du contenu dudit tampon de transmission en ping-pong, (156b) sur ledit premier assembleur de trames (160).

24. Unité selon la revendication 23, comprenant en outre un second assembleur de trames (162) connecté audit commutateur de routage (172), ledit commutateur de routage (172) étant utilisable pour contrôler l'écriture du contenu dudit second tampon de transmission en ping-pong (156b) sur au moins un dudit premier assembleur de trames (160) et dudit second assembleur de trames (162).

25. Unité selon la revendication 24, dans laquelle ledit commutateur de routage (172) est utilisable pour contrôler l'écriture du contenu dudit second tampon de transmission en ping-pong (156) aux deux dudit premier assembleur de trames (160) et dudit second assembleur de trames (162) pour générer deux flux de données multiplexés par répartition dans le temps.

26. Unité selon la revendication 23, dans laquelle ledit second tampon de transmission en ping-pong (156b) est utilisable pour stocker au niveau de la troisième pluralité desdits canaux de radiodiffusion, ledit commutateur de routage (172) utilisable pour contrôler l'écriture du contenu dudit premier tampon de transmission en ping-pong (156a) sur ledit premier assembleur de trames (162).

27. Unité selon la revendication 23, dans laquelle ledit premier tampon de transmission en ping-pong (156a) est utilisable pour ne commuter qu'un seul de ladite première pluralité desdits symboles à l'intérieur de celui-ci à la fois.

28. Unité selon la revendication 23, dans laquelle ledit second tampon de transmission en ping-pong (156b) est utilisable pour ne commuter qu'un seul de ladite deuxième pluralité desdits symboles à l'intérieur de celui-ci à la fois.

29. Unité selon la revendication 23, dans laquelle ledit premier assembleur de trame (160) est utilisable pour insérer au moins un bit de verrouillage de trame dans ledit second tampon de transmission en ping-pong (156b) pour identifier lesdits symboles stockés dans ledit second tampon de transmission en ping-pong (156b) comme une trame.

30. Unité selon la revendication 29, dans laquelle ladite trame comprend des intervalles de temps et ledit premier assembleur de trames (160) est utilisable pour insérer au moins un bit représentant un canal de contrôle d'intervalles de temps (170) dans ledit second tampon de transmission en ping-pong (156b) pour indiquer lesdits intervalles de temps dans lesquels sont stockés lesdits symboles correspondant aux canaux respectifs desdits canaux de radiodiffusion parallèles.

31. Unité selon la revendication 23, dans laquelle ledit appareil se trouve à bord d'un satellite (25) et ledit commutateur de routage (172) est contrôlable via des signaux de contrôle générés par une station au sol et transmis audit satellite (25).

32. Unité selon la revendication 24, dans laquelle ledit second assembleur de trames (162) stocke au moins un bit de verrouillage de trame pour identifier lesdits symboles stockés à l'intérieur de celui-ci comme une trame.

33. Unité selon la revendication 32, dans laquelle ladite trame comprend des intervalles de temps et ledit second assembleur de trames (162) stocke au moins un bit représentant un canal de contrôle d'intervalles de temps (170) pour indiquer les intervalles de temps dans lesquels sont stockées lesdits symboles correspondant aux canaux respectifs desdits canaux de radiodiffusion parallèles.

34. Unité de réception selon la revendication 1, dans laquelle un système de traitement de données utiles de satellite traite un signal montant consistant en une pluralité de porteuses à accès multiple par répartition en fréquence avec un seul canal par porteuse en des bits de bande de base numérique pour transmission à ladite unité de réception (29), comprenant :
un processeur de démultiplexeur polyphasé (144) pour séparer ledit signal montant en un flux de données multiplexé par répartition dans le temps de symboles et pour présenter lesdits symboles correspondant à chacune d'une pluralité de porteuses aux fréquences respectives desdites fréquences dans ledit signal montant de façon séquentielle à une sortie dudit processeur de démultiplexeur polyphasé (144) ;
un démodulateur par déplacement de phase (146) connecté à ladite sortie dudit processeur démultiplexeur polyphasé (144) pour démoduler ledit flux de symboles en flux multiplexé par répartition dans le temps correspondant de bits de bande de base numérique ; et
un dispositif d'alignement de débit (150) pour traiter ledit flux multiplexé par répartition dans le temps de bits de bande de base numérique pour compenser les différences de débit entre une horloge à bord (152) et lesdits symboles correspondant à chacune de ladite pluralité de porteuses reçues au niveau dudit satellite (25), et démultiplexer ledit flux multiplexé par répartition dans le temps en des canaux parallèles à débit aligné.

35. Unité selon la revendication 34, comprenant en outre un décodeur différentiel (146) connecté audit démodulateur par déplacement de phase (146) pour récupérer ledit flux de symboles lorsque ledit flux de symboles est codé de façon différentielle pour ledit signal de porteuse de liaison montante.

36. Unité selon la revendication 34, dans laquelle ledit démodulateur par déplacement de phase (146) est un démodulateur par déplacement de phase en quadrature pour démoduler chacun desdits symboles en deux bits correspondants.

37. Unité selon la revendication 34, comprenant en outre un processeur de commutation et de routage (172) pour router lesdits canaux dans au moins une d'une pluralité de porteuses de liaison descendante multiplexées par répartition dans le temps.

38. Unité de réception selon la revendication 1, dans laquelle un appareil d'alignement de débit pour un satellite (25) traite les bits de bande de base numérique pour transmission à ladite unité de réception (29), l'appareil d'alignement de débit comprenant :
une horloge à bord (152) ;
un commutateur d'entrée (161) ;
un commutateur de sortie (163) ;
une paire de tampons de transmission en ping-pong (153) comprenant des premier et second tampons (149, 151) et connectée audit commutateur d'entrée (161) et audit commutateur de sortie (163), lesdits premier et second commutateurs (149, 151) recevant un flux de symboles de bande de base numérique récupérés à partir d'un signal de liaison montante dépendant du fonctionnement dudit commutateur d'entrée (161) et dudit commutateur de sortie (163), ledit premier tampon (149) de ladite paire de tampons (153) recevant lesdits bits selon un débit d'horloge de liaison montante obtenu à partir dudit signal montant, ledit second tampon (151) de ladite paire de tampons (153) vidant de façon sensiblement simultanée le contenu stocké de celui-ci selon ladite horloge à bord (152), les opérations desdits premier et second tampons (149, 151) étant inversées lors de l'actionnement dudit commutateur d'entrée (161) et dudit commutateur de sortie (163) ;
des premier et second corrélateurs (155) connectés auxdits premier et second tampons (149, 151), respectivement, et utilisables pour générer une pointe lorsqu'un entête indique qu'une trame dans ledit flux de symboles de bande de base est détectée, ladite paire de tampons (153) étant utilisable pour poursuivre l'écriture dudit flux de symboles de bande de base dans un de ladite paire de tampons (149, 151) jusqu'à ce que ladite pointe se produise, ledit commutateur d'entrée (161) et ledit commutateur de sortie (163) étant commutés sur les états inverses de ceux-ci, lesdits premier et second tampons (149, 151) recevant ledit signal montant étant lus sur la sortie de ceux-ci selon ledit débit d'horloge à bord ;
un oscillateur à impulsions synchronisées (157) connecté auxdits premier et second corrélateurs (155) et utilisable pour générer une impulsion lissée pour chacun desdits symboles lus sur ladite sortie et
un compteur (159) connecté audit oscillateur (157) pour compter lesdites impulsions lissées, un nombre de bits étant ajoutés auxdits entêtes desdits flux et retirés de ceux-ci selon la valeur dudit compteur (159).

39. Unité selon la revendication 38, comprenant en outre une horloge de symboles de réception connectée audit premier tampon et audit second tampon (149, 151) et utilisable pour activer un quelconque tampon dudit premier tampon et dudit second tampon (149, 151) qui est actuellement connecté audit commutateur d'entrée (161) pour recevoir lesdits symboles récupérés dudit signal montant.

40. Unité selon la revendication 38, comprenant en outre une horloge de symboles à bord (152) connectée audit premier tampon et audit second tampon (149, 151) et utilisable pour activer un quelconque dudit premier tampon (149) et dudit second tampon (151) qui est actuellement connecté audit commutateur de sortie (163) pour produire en sortie lesdits symboles stockés à l'intérieur.

41. Procédé consistant à récupérer au moins un canal à débit préférentiel parmi plusieurs canaux à débit préférentiel transmis dans un flux de données descendant multiplexé par répartition dans le temps depuis un satellite (25) comprenant les étapes consistant à :
démoduler (190) ledit flux de données descendant en un flux de symboles, ledit flux de données descendant comprenant des intervalles de temps ayant une pluralité d'emplacements d'intervalle de temps et étant doté d'un nombre prédéterminé de canaux à débit préférentiel par ledit satellite (25), lesdits canaux à débit préférentiel comprenant chacun une pluralité de symboles, chacun de ladite pluralité de symboles étant affecté, respectivement, audits intervalles de temps pour étaler ladite pluralité de symboles correspondant à chacun desdits canaux à débit préférentiel sur ledit flux de données descendant, ladite pluralité de symboles pour chacun desdits canaux à débit préférentiel étant affectée audit un emplacement correspondant de ladite pluralité d'emplacements d'intervalle de temps dans chacun desdits intervalles de temps ;
démultiplexer (194) ledit flux de symboles pour localiser un canal de contrôle d'intervalles de temps inséré dans ledit flux de symboles au moyen dudit satellite (25) pour identifier lequel de ladite pluralité d'emplacements d'intervalle de temps comprend ladite pluralité de symboles d'au moins un desdits canaux à débit préférentiel correspondant à un fournisseur de service de radiodiffusion sélectionné ;
extraire (220, 205) ladite pluralité de symboles correspondant audit au moins un canal à débit préférentiel dudit fournisseur de service de radiodiffusion sélectionné dudit flux de symboles selon ledit canal de contrôle d'intervalles de temps ; et
multiplexer (196) ladite pluralité de symboles correspondant audit fournisseur de service de radiodiffusion sélectionné en un flux de données de canal de radiodiffusion en série.

42. Procédé selon la revendication 41, dans lequel ledit fournisseur de service de radiodiffusion utilise une pluralité desdits canaux à débit préférentiel, et comprenant en outre l'étape consistant à aligner (196) ladite pluralité de canaux à débit préférentiel les uns par rapport aux autres avant le multiplexage de ladite pluralité de symboles correspondant à ladite pluralité de canaux à débit préférentiel.

43. Procédé selon la revendication 42, dans lequel chacun desdits canaux à débit préférentiel comprend un entête et ladite étape d'alignement consiste en outre à :
écrire chacun de ladite pluralité desdits canaux à débit préférentiel dans des tampons (222) respectifs lors de la détermination (224) desdits cas respectifs d'arrivée desdits entêtes ; et
lire lesdits tampons (222) lors de la détermination du dernier des cas d'arrivée.

44. Procédé selon la revendication 41, consistant en outre à :
démoduler (190) ledit flux de données descendant en un flux binaire multiplexé par répartition dans le temps (TDM) en bande de base comprenant des trames générées par ledit satellite (25), chacune desdites trames comprenant une pluralité desdits intervalles de temps, chacun desdits intervalles de temps comprenant un ensemble desdits symboles, chaque symbole dans ledit ensemble de symboles correspondant à un canal respectif desdits canaux à débit préférentiel occupant une position de symbole similaire dans chacun desdits intervalles de temps ;
localiser (192) lesdites trames dans ledit flux binaire multiplexé par répartition dans le temps en bande de base en utilisant un préambule de trame principale inséré dans ledit flux binaire multiplexé par répartition dans le temps en bande de base par ledit satellite (25) ;
récupérer (194) à partir dudit ensemble de symboles dans chacun desdits intervalles de temps d'au moins une desdites trames les symboles qui correspondent à au moins un desdits canaux à débit préférentiel ; remultiplexer (196, 206, 208) lesdits symboles correspondant audit au moins un canal desdits canaux à débit préférentiel pour récupérer un canal de radiodiffusion correspondant à celui-ci et comme transmis à l'origine vers ledit satellite (25) ; et
extraire (220, 205) un entête de contrôle de service dudit canal de radiodiffusion.

45. Procédé selon la revendication 44, dans lequel ladite étape de récupération comprend les étapes consistant à :
localiser (194) un canal de contrôle d'intervalles de temps inséré dans ledit flux binaire par ledit satellite (25), ledit canal de contrôle indiquant lequel desdits intervalles de temps contient lesdits symboles correspondant à chacun desdits canaux à débit préférentiel ; et
extraire (220, 205) lesdits symboles correspondant à un desdits canaux à débit préférentiel choisis en utilisant ledit canal de contrôle.

46. Procédé selon la revendication 44, comprenant en outre l'étape consistant à déterminer (220, 212) si ledit entête de contrôle de service comprend un code d'identification inséré dans ledit canal de radiodiffusion par une station de radiodiffusion avant la transmission audit satellite (25) pour adresser uniquement un récepteur radio (29).

47. Procédé selon la revendication 44, comprenant en outre les étapes consistant à :
déterminer (220, 212) si ledit entête de contrôle de service comprend des données de contrôle ; et
utiliser un récepteur radio (29) pour effectuer au moins une d'une pluralité de fonctions en fonction desdites données de contrôle, ladite pluralité de fonctions comprenant le fonctionnement dudit récepteur radio dans un mode de réception choisi pour fournir un service multimédia sélectionné, pour afficher des données, pour afficher une image, et pour décrypter des données en utilisant une clé de déchiffrement fournie dans ledit entête de contrôle de service.

48. Procédé selon la revendication 41, dans lequel un programme de radiodiffusion d'un fournisseur de service de radiodiffusion est transmis à une ou plusieurs unités de réception à distance (29), consistant en outre à :
assembler des bits (26) correspondant à au moins une partie dudit programme dans un premier nombre d'incréments de débit préférentiel ayant des débits uniformes et prédéterminés ;
générer (28, 94) une trame (100) ayant une durée prédéterminée et comprenant chacun desdits incréments de débit préférentiel et un entête de trame (102),
diviser ladite trame (100) en symboles (114), chacun desdits symboles comprenant un nombre prédéterminé et consécutif desdits bits ;
démultiplexer (32, 82) lesdits symboles (114) de ladite trame (100) en un second nombre de canaux à débit préférentiel parallèles, chacun desdits canaux à débit préférentiel ayant la même dite durée prédéterminée que ladite trame (100), lesdits symboles (114) étant prévus dans un ordre prédéterminé à travers lesdits canaux à débit préférentiel pour séparer des symboles consécutifs desdits symboles (114), chacun desdits canaux à débit préférentiel comprenant un entête de synchronisation de canal à débit préférentiel pour récupérer lesdits canaux à débit préférentiel au niveau desdites unités de réception à distance (29) ; et
moduler (86) lesdits canaux à débit préférentiel sur un nombre correspondant des fréquences de porteuses de liaison montante pour la transmission de radiodiffusion.

49. Procédé selon la revendication 48, dans lequel ledit entête de trame (102) comprend des bits pour contrôler ladite unité de réception (29).

50. Procédé selon la revendication 48, dans lequel ledit programme est **caractérisé par** deux services et comprend en outre l'étape consistant à diviser (26) au moins un desdits incréments de débit préférentiel en deux parties pour porter lesdits bits correspondant vers lesdits deux services, respectivement.

51. Procédé selon la revendication 48, dans lequel ledit second nombre de canaux à débit préférentiel correspond audit premier nombre d'incréments de débit préférentiel.

52. Procédé selon la revendication 48, dans lequel ladite étape de modulation (26) comprend l'étape consistant à moduler chacun desdits canaux à débit préférentiel en utilisant une pluralité de modulateurs par déplacement de phase en quadrature.

53. Procédé selon la revendication 52, dans lequel lesdits symboles (114) comprennent chacun deux desdits bits.

54. Procédé selon la revendication 52, dans lequel ledit second nombre de canaux à débit préférentiel et ladite pluralité de modulateurs par déplacement de phase en quadrature (86) correspond en nombre audit premier nombre d'incréments de débit préférentiel.

55. Procédé selon la revendication 48, dans lequel ledit ordre prédéterminé est un ordre croissant.

56. Procédé selon la revendication 42, dans lequel un programme de radiodiffusion à partir d'un fournisseur de service de radiodiffusion est transmis à une ou plusieurs unités de réception à distance (29), comprenant en outre les étapes consistant à :
assembler (26) ledit programme en un premier nombre entier d'incréments de débit préférentiel ayant un débit uniforme et prédéterminé ;
générer (28) une trame (100) de bits ayant une durée prédéterminée et comprenant chacun desdits incréments de débit différentiel et un entête de trame (102) ;
coder (30, 80) ladite trame pour générer une trame codée comprenant des bits codés pour une protection de correction d'erreur de transmission ;
diviser ladite trame codée en symboles (114), chacun desdits symboles (114) comprenant un nombre prédéterminé et consécutif desdits bits ;
démultiplexer (82) lesdits symboles en un second nombre de canaux à débit préférentiel parallèles, lesdits symboles (114) étant prévus dans un ordre prédéterminé à travers lesdits canaux à débit préférentiel pour séparer les symboles consécutifs desdits symboles (114), chacun desdits canaux à débit préférentiel comprenant un entête de synchronisation de canal à débit préférentiel pour récupérer lesdits canaux à débit préférentiel au niveau desdites unités de réception à distance ; et
moduler (86) lesdits canaux à débit préférentiel sur un nombre correspondant de fréquences de porteuses de liaison montante pour une transmission de radiodiffusion.

57. Procédé selon la revendication 56, dans lequel ladite étape de codage (30, 80) implique au moins un schéma de codage choisi dans le groupe comprenant le codage de Reed-Salomon, l'entrelacement et le codage de convolution en treillis.

58. Procédé selon la revendication 56, dans lequel ladite étape de codage (30, 80) comprend les étapes consistant à :
coder ladite trame (100) selon un premier schéma de codage pour générer une première trame codée ;
entrelacer ladite première trame codée pour générer une trame codée entrelacée ; et
coder ladite trame codée entrelacée en utilisant un second schéma de codage.

59. Procédé selon la revendication 58, dans lequel ledit premier schéma de codage est un schéma de codage de Reed-Salomon.

60. Procédé selon la revendication 58, dans lequel ledit second schéma de codage est un schéma de codage de convolution en treillis.

61. Procédé selon la revendication 56, dans lequel ledit ordre prédéterminé est un ordre croissant.

62. Procédé selon la revendication 41, dans lequel le débit de symboles de liaison montante est aligné sur une horloge à bord (152) sur le satellite (25) pour un traitement en bande de base numérique avant la transmission via un flux descendant multiplexé par répartition dans le temps, l'alignement comprenant les étapes consistant à :
remplir un tampon (149, 151) avec une pluralité desdits symboles à un débit de symboles reçus ;
corréler (155) lesdits symboles dans ledit tampon en trames en comparant un entête inséré parmi lesdits symboles avec un mot de verrouillage de trame unique pour localiser ledit entête entre ladite pluralité de symboles qui est stockée dans ledit tampon (149, 151) et générer des pointes de corrélation lorsque ledit entête est localisé,
compter (159) le nombre de tics d'horloge générés par une horloge de symboles à bord entre lesdites pointes de corrélation ; et ajuster la longueur (159) dudit entête (112) dans ledit tampon pour compenser une différence de débit entre ledit débit de symboles reçu et ledit débit de symboles à bord.
